# EUROPEAN PATENT SPECIFICATION

(11) **EP 0 838 380 B1**
(45) Date of publication and mention of the grant of the patent: **17.07.2002**
(21) Application number: 97919407.3
(22) Date of filing: 22.04.1997
(51) Int. Cl.: B60S 5/04

(54) **ELECTRONIC AIR DISPENSING AND PRESSURE BALANCING SYSTEM FOR TYRES**
ELEKTRONISCHE REIFENFÜLLSTATION MIT DRUCKREGULIERUNG
STATION DE GONFLAGE DE PNEUMATIQUES ELECTRONIQUE AVEC REGULATION DE PRESSION AUTOMATIQUE

(30) Priority: 22.04.1996 ES 9600911; 08.10.1996 ES 9602122
(43) Date of publication of application: 29.04.1998
(73) Proprietor: FAST AIR, S.L., 28016 Madrid (ES)
(72) Inventor: LOUREIRO BENIMELI, Fermin Jaime, E-28016 Madrid (ES)
(74) Representative: Urizar Anasagasti, José Antonio
(86) International application number: PCT/ES97/00102
(87) International publication number: WO 97/39925

(56) References cited:
- EP-A- 0 605 743
- DE-U- 8 631 229
- FR-A- 2 592 972
- US-A- 3 913 632
- US-A- 4 694 409
- US-A- 4 875 509
- PATENT ABSTRACTS OF JAPAN vol. 008, no. 012 (M-269), 19 January 1984 & JP 58 174051 A (TOUKIYOU TATSUNO:KK), 13 October 1983

## Description

The object of the present invention relates to an electronic air suppliying and pressure equalizer system for tyres, to be preferably installed at gas stations, service areas, mechanical assistance points on roads or the like, which has important advantages over installations nowaday existing.

Correct tyre-inflating of vehicles in circulation is a determinant factor for road safety, as well as further economic factors such as tyre durability or fuel consumption.

Nowadays, most assistance points located in gas stations, service areas, mechanic assistance points on roads or the like have a variety of installations allowing user to control or check up the pressure condition of vehicle tyres, which however have some lacks resulting in important drawbacks for users of said installations.

Most inflating installations nowadays existing consist of a compression unit which either through a deposit or directly supplies a gas, preferably compressed air, to a inflating unit generally constituted by one only conduit or hose, in whose free end there is located an inflating valve which is coupled to the valve of vehicle tyre to be inflated or whose pressure is to be checked. Pressure control of each tyre is carried out through a central control unit. Likewise, user has tables for pressure calibration, in order to determine a suitable tyre pressure in each vehicle and under each driving condition.

However, this inflating installation structure has a series of drawbacks. Arrangement of one only inflating conduit or hose demands user to suitably park the vehicle in order to thereby achieve the inflating of tyres thereof without needing vehicle re-location during the operation of pressure checking in different tyres. Even so, in most cases, in order to reach those tyres faraway from the installation, user has to suitably park the vehicle again or, in the best condition, to juggle with inflating hose, to pass it below or above the vehicle, as the unique manner to reach said tyres.

Likewise, most inflating installations are not provided with automatic means for inflating hose withdrawal, therefore, in most installations of this kind, said hose is thrown to the ground or even in zones where vehicles run in, which provokes its dirtiness, as well as rubber deterioration and subsequent breaking, with the important drawbacks and expenses that it bears.

On the other hand, calibration tables installed next to inflating systems nowaday existing are often not very useful and they are frecuently incomplete.

Finally, studies carried out by the motor world demonstrate that most air supplying machines, due to their use, are damaged and they are not reliable, and that their signposting is deficient many times, then being totally unnoticed by user.

It is known in the art by the U.S. Patent number 3,913,632 the possibility on inflating and/or pressure equalizing simultaneously several tyres of a vehicle by manually setting a desired pressure value in a pressure control valve.

In addition, closest prior art document FR 2 592 972 A1 discloses an apparatus, controlled by microprocessor, suitable to automatically adjust pressure of a tyre to a value previously introduced by means of a keyboard, showing visual indications about values, process status and actions to be performed.

The U.S. Patent number 4,875,509 discloses an air pump pressure control system for inflating pairs of automotive tyres, in a manually controlled way by means of two manually operated valves to augment/diminish pressure value of tyres, having a pressure transducer and a display showing such value for feedback to operator.

The EP 0 605 743 A1, of the proper inventor, discloses a system for inflating tyres, microprocessor controlled, in which a desired inflating pressure value is selected by means of diverse pushbuttons, having each one a special feature coincident with that of a tyre valve, (colour, code...), thus avoiding the need of knowing the recommended pressure value. Said system can inflate/equalize two tyres simultaneously, having also a display and two pushbuttons to augment/decrement a tyre pressure.

In order to efficiently overcome the lacks of inflating systems nowadays existing, the electronic air-supplying and pressure-equalizer system for tyres, object of the present invention has been developed.

The object of the invention is achieved by the subject-matter of claim 1; further advantageous embodiments thereof are defined in the dependent claims.

The present invention relates to an air supplying and pressure-equalizer system for tyres, to be preferably installed at gas stations, service areas, mechanical assistance points on roads or the like, preferably comprising a working unit or machine, which is constituted as the main element of the system, from where operation of inflating vehicle tyres is controlled and effected, said working unit being constituted by a housing, a metal framework, an electronic meassuring instrument, a pneumatic equipment and means for visualization and control, a pressure source or compressor equipment providing dry air from an inner or outer compression unit, a basis or supporting unit and an air delivering unit which conveys air from working unit or machine to vehicle tyre valves and which permits, in the case of vehicles having two wheel in each axle, pressure balancing of tyres belonging to the same axis.

More concretely, working unit or machine allows the supply of any pressure to vehicle tyres as well as pressure balancing in wheels of the same axle for vehicles with two wheels in each axle.

Said working unit or machine is provided with a housing, constituted as the outside envelope and therefore as the cover which shapes said machine in a regular quadrangular pyramidal fashion suitable to protect inner elements, made, at one side, of metal terne plate and, at the remaining sides, of high density expanded stiff polyurethane resin. At said metal side, one or more gates with joint hinges are provided, suitable to allow access to inner elements in the machine, which are provided with a boxing with a drain and a rubber seal, as well as with a safety lock. Housing is further provided with ventilation means to obtain an air current inside which avoids moisture condensation on electronic components, such as, preferably, several ventilation screens preferably located at the upper and the lower portion of the housing.

Metal framework in the working unit or machine consists of a metal structure preferably built of L-shaped section profiles, in order to provide machine with rigidity and to support lateral stresses which may appear due to external agents such as wind. Said metal framework is further provided with means for fixing the housing, preferably constituted by screws.

Measuring instrument in the working unit or machine consists of an electronic set comprising three intelligent modules, such as a visualizer-supervisory module, a keyboard module and an adjustment module, independently operated, each one having a microcontroller for the execution of process commended to each module, preferably communicated by two wires in accordance with the specifications of the corresponding communication bus, as well as a pneumatic control and power supply module providing power supply for operation of the remaining modules, simultaneously managing pneumatic equipment.

More concretely, said visualizer-supervisory module of the measuring instrument is constituted by a microcontroller, a series-parallel interface for managing the visualizer, a visualizer, a write protected memory, a supply control circuit, a infrared receiving circuit, a battery and a charge circuit. Said module is in charge of presenting the pressure measure, in an intelligible manner, outside, storing the information introduced from outside through the keyboard module, as well as supervising the system operation, managing the information received from the remaining modules, deciding what process to be effected, and sending the appropriate commands through the communication bus to the remaining modules.

Keyboard module is in charge of receiving commands from outside and communicating them to the visualizer-supervisory module for their interpretation and for acting in accordance with the criterion stablished by a program, and it is provided with a microcontroller, a keyboard an interface between said microcontroller and the keyboard, light indicators and, optionaly, with cashing means, either by coins or by credit cards. Detection of the activation of a key, approval of a card-transaction or coin-acceptance are communicated by the data communication bus to the visualizer-supervisory module, said visualizer- supervisory module determining the process(es) to be effected, including commands to the keyboard module for activating or disabling either the light indicators or the card (or coin) acceptor.

Adjustment module is in charge of recovering information about pressure and converting said information into digital information; it has a microcontroller, an analogical-digital converter with differential input, a low noise linear amplifier and a pressure transducer. Said adjustment module converts information regarding to barometric pressure into a numerical digital value, operates electrovalves and manually or automaticaly carries out those necessary pressure-adjustment processes to achieve a desired pressure.

Finally, pneumatic control and power supply module consists of the circuit in charge of supplying the necessary energy to each one of the forementioned modules for a correct operation thererof; it has voltage stabilizers such as, preferably, a circuit with a transistor and protection means, such as a filter located at AC input in order to avoid the production of radiofrecuence interferences. Additionally, it is provided with a power supply monitoring system, suitable to detect voltage drops below a safety value, and it supplies the initialization signal to modules. Finally, it includes a power control for managing the pneumatic equipment by, preferably, optocoupling triacs allowing voltage in said pneumatic equipment or not, as well as a monitoring of a correct operation of said pneumatic equipment.

Optionally, the electronic air supplying and pressure equalizer system for tyres has a remote control for selecting a inflating pressure to be reached by said system. Said remote control will have a keyboard, a converter of electric signals generated by the keyboard to, preferebly, infrared waves, and a transmitter for said waves, suitable to emit the signal corresponding to the value introduced by said remote control keyboard to the infrared receving circuit installed in the working unit or machine preferably in its housing. Said signal receiving circuit has a signal transducer converting the infrared signal received into an electric signal, which is directly sent to the visualizer-supervisory module of the measuring instrument, whose microcontroller generates the corresponding commands.

Said keyboard installed in the remote control may be either a numerical keyboard, similar to those installed in the working unit and integrated in the keyboard module, suitable for introducing any pressure value, or one only key containing recorded a value associated with the optimum pressure of particular vehicle tyre, in which case remote control would be personal, associated with such vehicle.

Pneumatic equipment of working unit or machine is the element in charge of managing the air flow which will permit to fill up or to empty tyres untill achieving a desired pressure. Said pneumatic equipment consists of four electrovalves communicating inflating conduits or hoses alternatively with the pressure source or compressor, or with the atmosphere. Said electrovalves join together in a common node, to which said measuring instrument joins too.

Two from said electrovalves work simultaneously and are in charge of connecting distribution and connection means, such as inflating conduits or hoses, coming from vehicle tyre valves to said common node, so achieving a double effect. On one hand, pressures into both tyre valves get equal and at the same time, it is possible to measure the pressure of the grip between the wheels. The use of two electrovalves does not permit the cross balancing of wheels as hoses change between one axle and an other.

Once the above set of tyre connected electrovalves is open, one of the two remaining electrovalves joins the common node with the pressure source or compressor in order to thereby increase pressure.

Alternatively, once the above set of tyre connected electrovalves is open, the second of the two remaining electrovalves joins the common node with the atmosphere in order to thereby decrease pressure.

Pneumatic set is complemented with several means for protecting the measuring instrument against water and dirtiness existing in the installation and/or in the pressure source of compressor, as well as against pressures higher than those which said measuring instrument can support, such as a filter and a regulator located between the pressure source or compressor and a non-return valve, which is situated ahead the electrovalve controlling input of compressed air to the common node, said non return valve equipped in order to avoid that, in absence of pressure inside the pressure source or compressor, tyres deflate.

The pressure source or compressor of the electronic air-supplying and pressure-equalizer system for tyres provides dry air at a pre-established minimum pressure. Said pressure source or compressor can be either interior, so suitably sizing the outer housing in order to lodge said pressure source or compressor, or external, in which case, a larger and therefore more powerful pressure source or compressor can be used, thereby favouring the response time of the system.

The basis or supporting unit consists of a socle or pedestal, appropriate to support the working unit or machine and the air delivering unit, parallelopipedic-wise shaped, open at its lower face, preferably made of steel plate, which is provided with means for fixing to the ground by screws and retaining billets. Said basis may optionally have a small gate for having access to the coin box existing inside the machine.

Air delivering unit is the unit in charge of leading air from the working unit or machine to vehicle tyre valves through several inflating conduits or hoses; it has a structure for supporting said inflating conduits or hoses, location means suitable to adapt said inflating conduits or hoses position to vehicle tyres to be inflated or whose pressure will be checked, and means for return and/or automatic withdrawal of said inflating conduits or hoses from a working position to a rest position. Said air delivering unit configuration is therefore suitable to avoid that neither said inflating conduits or hoses nor their terminal coupling nozzles drag on the ground, thereby avoiding the resulting deterioration and dirtiness.

Means for supporting inflating conduits or hoses of the air delivering unit are preferably constituted with a structural rigidity capable of resisting such factors as operation by users, climate conditions and, in inflating installations which place said supporting means on the ground, the weight of vehicles driving on the same.

The means for location of inflating conduits or hoses in vehicle tyres basically depend on the practical embodiment of the electronic air-supplying and pressure-equalizer system for tyres; they are movable, so that the user manages the location means for coupling inflating conduits or hoses to vehicle tyres. In any case, said location means are capable of making easier for the user the fitting of inflating conduits or hoses to vehicle tyres.

Air delivering unit of the electronic air-supplying and pressure-equalizer system for tyres object of the present invention is provided with means for return and/or automatic withdrawal of said inflating conduits or hoses from a working position to a rest position, preferably constituted by automatic mechanisms for return, withdrawal and/or rolling up of the inflating conduits or hoses as well as means for location of said inflating conduits or hoses, especially in case of movable location means.

In order to facilitate and achieve a better disposal of inflating conduits or hoses of the installation to a vehicle whose tyres will be inflated or whose pressure will be checked, it becomes appropriate to provide different inflating conduits or hoses preferably placed at both sides of the vehicle when it stops in the inflating installation to get on the corresponding process. Thereby, electronic air-supplying and pressure-equalizer system for tyres preferably comprises two or four inflating conduits or hoses.

Optionally, electronic air-supplying and pressure-equalizer system for tyres may be provided with a inflating conduit or hose specific for use in vehicles with two-wheels, such as bicycles, motorcycles or the like.

Additionally, inflating conduits or hoses have at their free ends, coupling means capable of coupling said inflating conduits or hoses to tyre valve and thereby getting on with the inflating or pressure checking in the corresponding tyre.

Said coupling means capable of coupling said inflating conduits or hoses to tyre valve preferably consist of a coupling nozzle, suitable for its easy and fast connection and disconnection of inflating conduits or with type valves, defined by a small diameter cylindrical configuration with a lenght suitable to reach the valve, in case of this latter is lodged in a cavity, which is provided with automatic lockage means suitable to avoid air escape when coupling nozzle is not connected to a valve.

More concretely, said coupling nozzle comprises a cylindrical shaped external piece or slide closed at its rear side by a screw cap, in whose opposite end it is provided with a circular opening suitable to get into the valve. Inside said external piece or slide, two pieces are lodged sliding in relation to the first one and mounted one with the other preferably by a screwed joint. Inside one of said pieces, the nearest to tyre valve, a hollow, internally stepped tubular piece is lodged sliding in relation to said piece which lodges it, and lodging a hammer consisting of a cylindrical rod which has a widening with a polygonal, preferably hexagonal cross-section suitable to avoid the return inside said tubular piece as well as to allow an air current between the interstices existing between polygon chords and circular section of the tubular piece. Said tubular piece has, in its end nearest to tyre valve, a rubber conical seal, suitable to plug the air inlet hole. Finally, said tubular piece has two "L"-ended springs fastened by an external cylindrical collar. The "L"-end of said springs is introduced in several grooves made on said tubular piece nozzle. On the other hand, the second of said pieces lodged in the external_piece or slide, that nearest to the air inlet through the external conduit or hose, has a cylindrical hollow inside, and it has a valve core screwed in its fore end, similar to those lodged in vehicle valves, at whose free end it has a little spring and its rear portion externally ends in a series of, preferably culvertail shaped, projections, appropriate for a leakproof-coupling to the external air conduit or hose, through which air from working unitor machine flows. Likewise, said piece has a circular crown-shaped internal widening which has four balls diametrically and normally opposite two by two embedded and pressed by springs, said balls being faced to an inner groove made in said external piece or slide. Next to its internal widening and faced to the inside of the coupling nozzle, an inner spring being arranged surounding the tubular outside of said piece, suitable to integrally move both pieces lodged in said external piece or slide, and thereby draw said balls out from the corresponding grooves. Finally, the external piece or slide is inside provided with a collar shaped like a truncated cone, suitable to press said "L"-ended springs when the integral set formed by the pieces has moved to a stop resulting from the screw cap closing said external piece or slide.

The electronic air-supplying and pressure-equalizer system for tyres object of the present invention whose configuration has been disclosed above, is provided with different modes of working which the user can select.

Therefore, the three modes of working which the electronic air-supplying and pressure-equalizer system for tyres has are: checking-balancing mode, manual inflating-balancing mode and automatic inflating-balancing mode.

Checking-balancing mode is selected by pressing a key arranged for that purpose in the keyboard forming a part of the keyboard module, so provoking the opening of the adjustment module electrovalves, and it is used by the user in order to check tyre pressure as well as to balance the pressure of tyres belonging to an axle of a vehicle, in case of said axle has at least two tyres, presenting the pressure existing inside tyres once it has been determined by the electronic measuring instrument, on the visualizer of the visualizer-supervisory module of the measuring instrument.

Manual inflating-balancing mode allows to adjust the pressure as user wishes, by using inflating and deflating key(s) arranged on the keyboard forming a part of the keyboard module, therefore operating the corresponding electrovalve, at the same time that pressure existing inside vehicle tyres measured through said measuring instrument is displayed on the visualizer of the visualizer-supervisory module. Comparison of the information displayed on said visualizer regarding to pressure existing inside the tyres, with the presure desired by the user to reach inside vehicle tyres determines the inflating or the deflating action. Pressure balancing between tyres belonging to the same axle is automaticaly carried out by the configuration of the system and, in particular, that of the electrovalves described above.

Automatic inflating-balancing mode allows to adjust the pressure, as the user wishes, up to a value pre-established by him/her by introducing the corresponding value through the keyboard forming a part of the keyboard module, either by explicit numerical introduction by pressing the corresponding numerical keys arranged for that purpose, or by selecting any pre-determined value by pressing the only key arranged for that purpose. Once said pre-established value is selected, the machine automaticaly acts by suitably working the electrovalves untill the preselected value is achieved, tyre pressure being compared at every moment with the pre-determined value, and the machine acting consequently.

Optionally or additionally, the electronic air-supplying and pressure-equalizer system for tyres, in terms of its working modes, can be provided with an acoustic warning device which indicates by an acoustic signal that system has finished the inflating-balancing process, so the pre-determined value being reached, when said system works at the automatic inflating-balancing mode.

Finally, the electronic air-supplying and pressure-equalizer system for tyres object of the present invention is provided with different selectable cashing modes such as free mode or payment mode as selected by system's operator and, when choosing the payment mode, it is provided with various options: coin payment or card payment, either with proprietary card comprising a determined number of services or with a money-card of any bank, eligible by the user. Said coin-box comprises a groove through which the necessary coin(s) should be inserted in order to switch the system on. In the case of a defective coin were inserted and blocked up, it will be recovered by pressing the return button located below said groove, thereby coin will appear in a box located below said button. Likewise, if coin were unappropriate or system were either unplugged from the network or on working, said coin would be automatically returned.

Optionally, the electronic air-supplying and pressure-equalizer system for tyres object of the present invention can be provided with means for remote control from a central station in order to test the system status, as well as, when necessary, to periodically count up the money collected in said system. Said remote control means are preferably established by communication via modem.

Additionally, the electronic air-supplying and pressure-equalizer system for tyres object of the present invention can be optionally provided with a transmitter-receiver system in order to consider, along the pressure adjustment process, some parameters such as, in particular, temperature. For that, a tyre valve is arranged, provided with a temperature measurer, a transducer converting said temperature signal into an electric signal, and a transmitter, preferably operated by infrared or other electromagnetic type waves, sending said electrical signal converted into radiofrecence waves or infrared radiation, up to a receiver arranged in the electronic air-supplying and pressure-equalizer system for tyres, preferably on its housing. Signal received is converted into an electric signal and sent to the visualizer-supervisory module, whose microcontroller will suitably estimate the tyre temperature pondering factor regarding to the selected pressure, therefore generating a corresponding correction factor.

Likewise, the electronic air-supplying and pressure-equalizer system for tyres object of the present invention is provided with means for indicating the working arid the end of operating such as, preferably, a decorative system, such as, for example, a windmill electrically connected to the visualizer-supervisory module to work its spin movement while machine is working, as well as a sound warning capable of emitting an acoustic signal once the process of tyre inflating and/or pressure balancing between tyres of an axle has finished.

The electronic air-supplying and pressure-equalizer system for tyres object of the present invention may consist of one only unit, as disclosed above or adopt a modular design so becoming a multi-station, multi-user and multi-function system. In this case, system will comprise a centre for managing a plurality of terminal service stations, as well as a set of autonomous use terminals, subjected to said managig centre. Different elements disclosed above will be distributed among different components of said multi-station system. Therefore, managing centre will include a pressure source or compressor, owning to the centre where it is installed, a general control circuit, suitable to carry out the acceptance of cashing means, store transactions, control service times, and manage communications, as well as a communication module, preferably via modem. On the other hand, autonomous use terminals will be provided with a visualization device, a pressure control, a keyboard control, a cashing control, including a coin box and a card reader, as well as a pressure transducer. Particular disposal as well as features of each autonomous terminal will be able to adopt any embodiment to which reference is made below for the electronic air-supplying and pressure-equalizer system for tyres object of the present invention. Likewise, it is appropriate to underline that compressor placed in said managing centre will be suitably sized to do a service to the different autonomous terminals simultaneously, or at least to a determined number of them, simultaneously.

From all that has been disclosed above, many advantages provided by the electronic air-supplying and pressure-equalizer system for tyres object of the present invention are apparent, such as the convenience and easiness for using the system by the user, as well as the cleaning derived from the fact that system has an air delivering unit comprising a support and a gyratory arm, whose configuration avoids that hoses or inflating conduits in charge of bringing air from system up to tyres would get thrown to the ground being spoilt or broken, thanks to having automatic means for the withdrawal of inflating conduits or hoses, and its feasibility, thanks to having suitable remote checking means.

In order to better understand the object of the present invention, a preferred practical embodiment of the electronic air-supplying and pressure-equalizer system for tyres, is next disclosed based on figures herein attached. In said figures, the following is shown:
Figure 1 shows a frontal view of a first embodiment of the electronic air-supplying and pressure-equalizer system for tyres object of the present invention.
Figures 2a, 2b, 2c and 2d show lateral views of the housing of the working unit of the present practical embodiment of the electronic air-supplying and pressure-equalizer system for tyres object of the present invention.
Figure 3 shows a transversal cross-section of the housing and metal framework of the working unit of the electronic air-supplying and pressure-equalizer system for tyres object of the present invention.
Figures 4a and 4b show, respectively, a front view and a plan view of the air delivering unit consisting of a support and a gyratory arm.
Figures 5a and 5b show two cross-section views of the nozzle for coupling the inflating conduits or hoses to tyre valve, standing for, respectively, a rest and load conditions, i.e., when all air inlets are open.
Figures 6a, 6b, 6c, 6d and 6e show, respectively, a front view, a lateral view, a plan view and two transversal and longitudinal, cross-section-views of the basis or supporting unit.
Figure 7 shows the electric scheme of the present practical embodiment of the electronic air-supplying and pressure-equalizer system for tyres object of the present invention.
Figure 8 shows the pneumatic scheme of the present practical embodiment of the electronic air-supplying and pressure-equalizer system for tyres object of the present invention.
Figure 9 diagrammaticaly shows a view of a second preferred practical embodimen not belonging to the invention of the electronic air-supplying and pressure-equalizer system for tyres, comprising two inflating modules or devices.
Figure 10a shows a cross-sectioned inside of the inflating module or device corresponding to the second practical embodiment represented in figure 9.
Figure 10b shows a front view of the outside of the inflating module or device corresponding to the second practical embodiment represented in figure, 9.
Figure 11 diagrammaticaly shows a view of a third preferred practical embodiment not belonging to the invention of the electronic air-supplying and pressure-equalizer system for tyres, comprising four inflating modules or devices.
Figure 12 diagrammaticaly shows a view of a fourth preferred practical embodiment of the electronic air-supplying and pressure-equalizer system for tyres not belonging to the invention, comprising two inflating modules or devices.
Figure 13 shows a scheme of an embodiment of a multi-user system of the electronic air-supplying and pressure-equalizer system for tyres.

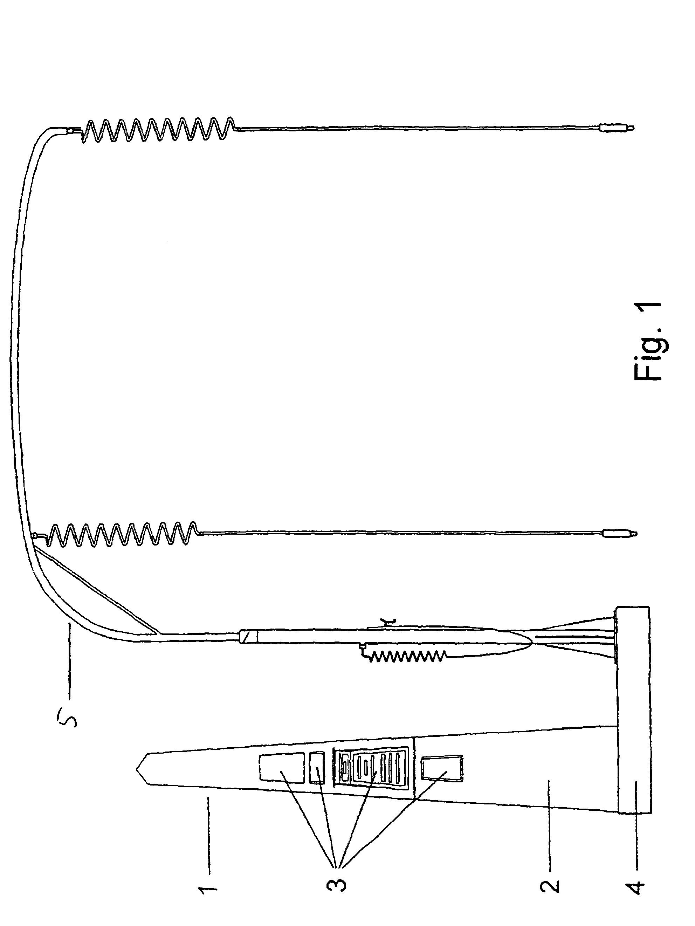

Figure 1 shows a practical embodiment of the electronic air-supplying and pressure-equalizer system for tyres consisting of a working unit or machine (1), which is constituted as the main element of the system, from where the process of inflating vehicle tyres is controled and carried out, which allows the supply of any pressure to the vehicle tyres as well as the pressure balancing between wheels of the same axle, in the case of vehicles having two wheels at each axle, wherein there are shown the housing (2) and the visualization and control means (3) from said working unit. Likewise, the electronic air-supplying and pressure-equalizer system for tyres consists of a pressure source or compressor equipment (47) not shown in figure), which provides dry air from an internal or external compressor unit, a basis or supporting unit (4) and an air delivering unit (5) conveying air from the working unit or machine (1) up to vehicle tyres and which, in the case of vehicles with two wheels at each axle allows pressure balancing between tyres of the same axle.

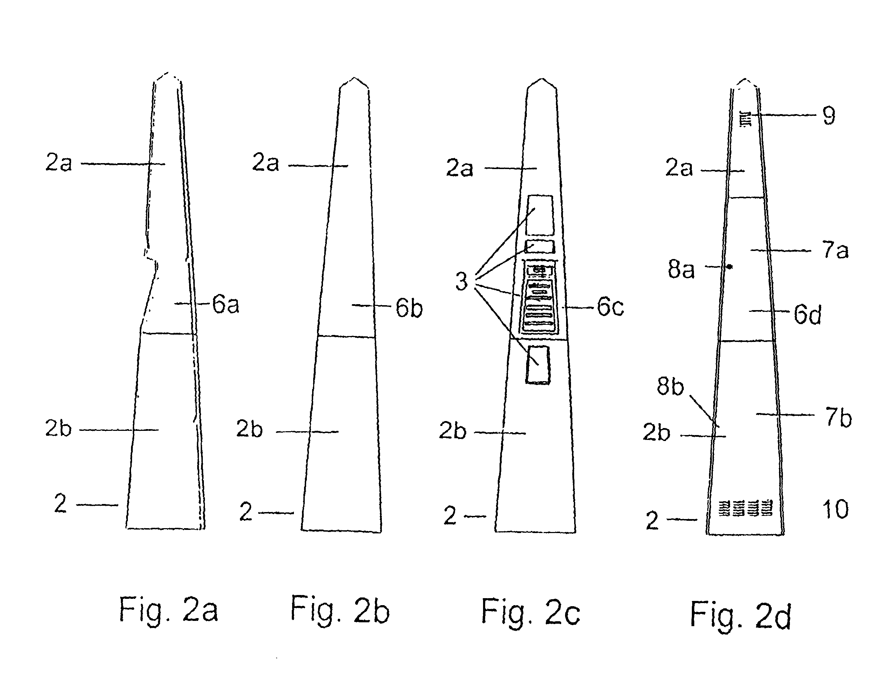

Figures 2a, 2b, 2c and 2d show the housing (2) of the working unit constituted as the external envelope shaped as a square-base truncated pyramid. In order to make its construction easier, housing (2) is divided into two, upper (2a) and lower (2b) portions, leakproof linked together. So that, said housing (2) is the coating which shapes said machine, suitable to protect internal elements. Housing (2) is made, at one of its sides (6d)(figure 2d), of metal terne plate. At the remaining sides (6a, 6b, 6c)(figures 2a, 2b, 2c), said housing (2) is made of high density expanded stiff polyurethane resin. At said metal side (6d) two gates (7a, 7b) with joint hinges are provided, to allow the access to inner elements in the machine, which are provided with a frame with a drain and a rubber seal, as well as with a safety lock (8a, 8b). Housing (2) is further provided, preferably located at said metal side (6d), with air inlet screens located at the upside (9) and downside (10) of said housing (2), in order to allow an inner air current which avoids moisture condensation on electronic components.

At the fore side (6c), housing is provided with means for coupling visualization and control means (3) of the system, such as, preferably, a visualization display, a keyboard and various cashing means (figure 2c).

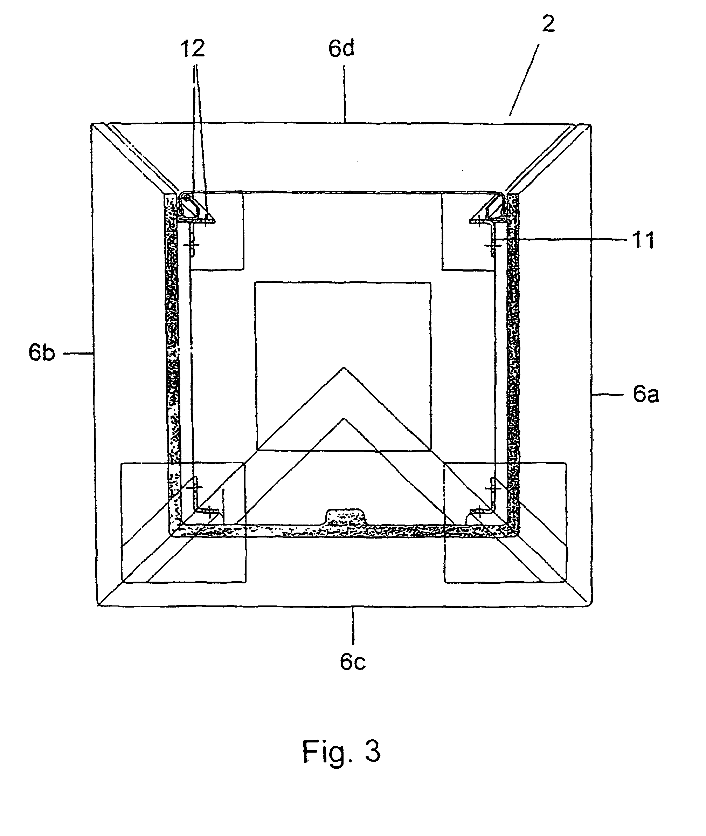

Figure 3 shows a transversal cross-section of housing (2) and metal framework (11). As it is noticeable from said figure, metal framework consists of a metal structure made of L-shaped cross-section profiles (12), in order to provide the machine with rigidity and to support lateral stresses which may occur due to external agents such as wind. Said metal framework (11) is further provided with means for fixing the housing, preferably constituted by screws (not shown in figure).

Air delivering unit (5) of the electronic air-supplying and pressure-equalizer system for tyres object of the present invention is the unit in charge of conveying air from the working unit or machine (1) up to vehicle tyre valves. Said air delivering unit (5) is provided with a structure for supporting said inflating conduits or hoses (21) with location means suitable to adapt the location of said inflating conduits or hoses (21) up to vehicle tyres to be inflated or whose presure is to be checked, and with means for automatic return or withdrawal of said conduits or hoses from a working position up to a rest position.

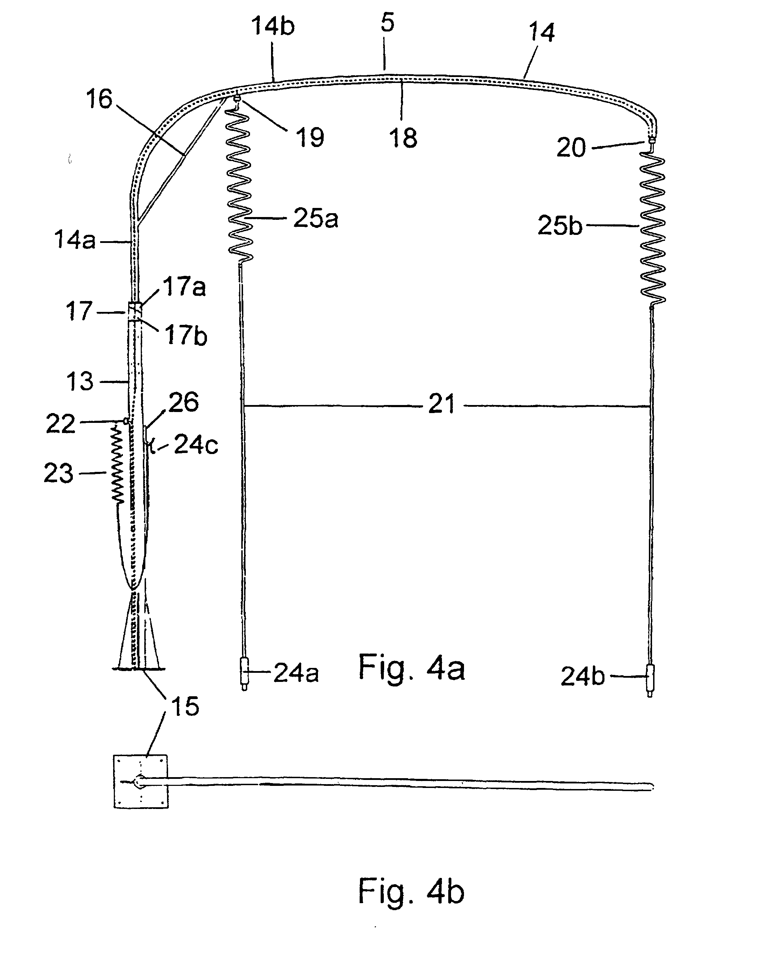

Figure 4a and 4b show a practical embodiment of said air delivering unit (5) comprising a support (13) and a gyratory arm (14). Support (13) consists of a hollow tube made of painted steel, at whose lower end it has means for fixing to the basis (4) of the electronic air-supplying and pressure-equalizer system for tyres, preferably consisting of an anchorage plate (15) to screw on the basis (4). Gyratory arm (14) comprises a first vertical tubular piece (14a) from whose end, a second tubular piece (14b) extends describing a 90° curve untill getting horizontal, i.e., parallel to the ground, and a diagonal bar (16) for supporting and reinforcing said horizontal tubular piece (14b). The height at which said horizontal tubular piece (14b) is placed is preferably of more than 1.70 m, and, in any case, in accordance with the height of vehicles to operate with the present inflating installation.

Air delivering unit (5) is provided with location means, which allow a 90°-180° rotation of the upper tubular piece of the arm (14) arround the lower tubular stretch or support (13), from a rest position considered as that in which the upper horizontal tubular piece (14b) is substantially placed parallel to the longitudinal axis of a vehicle parked next to the inflating system, up to a working position, considered as that in which the upper horizontal tubular piece (14b) is substantially placed perpendicular to the longitudinal axis of a vehicle parked next to the inflating system, in order to proceed to inflate the tyres located at each side of the vehicle parked or to check the pressure thereof. Said location means consist of said arm (14) rotation means arranged at the upper end, such as, preferably, a nylon bearing (17) composed of two coupled cylinders (17a, 17b), slant wise cross-sectioned, so that when arm (14) rotation is effected, the gravity (17) forces it to return to a non-forced position.

Through the inside of said support (13) and arm (14), tubes (18) run, entering by said support (13) basis, and through which air from working unit (1) or machine flows. Said arm (14) has two outlet holes (19, 20) to lead hoses (21) out to vehicle tyre. The gap between said outlet holes (19, 20) is preferably between 1.75 m and 2.80 m; more preferably between 1.90 m and 2.50 m and, in any case, in accordance with the width of vehicles to be operated with the present inflating installation. Likewise, support (13) of the air delivering unit (5) has a lateral hole (22) for the outlet of a inflating conduit or hose (23) specific for being used in vehicles with two wheels, such as bicycles, motorcycles or the like.

Likewise, air delivering unit (5) is provided with means for automatic return or withdrawal of said inflating conduits or hoses (21) from a working position up to a rest position, each consisting of, firstly, vertical coilings (25a, 25b) for lifting, return and/or withdrawal of inflating conduits or hoses (21) arranged on the upper, horizontal tubular piece (14b) of the gyratory arm (14) described above, to withdraw inflating conduits or hoses (21) from a extended position to reach inflating valves of tyres, up to a withdrawn position, in which they hang from the upper horizontal stretch without touching the ground, in order to avoid spoiling thereof and, secondly, the preferably 90° to 180° gyratory device with automatic gravitatory return disclosed above, which effects an automatic gravitatory return movement of the upper tubular horizontal piece arround the point of coupling between support (13) and the gyratory arm (14), from a working position up to a rest position.

The inflating conduit or hose (23) for operating vehicles with two wheels, such as bicycles, motorcycles, motor bikes or the like, is provided with supporting means for a rest position, for example, shaped as a hook (26), and manual or, optionally automatic means for return and/or withdrawal (not shown in the figure).

Additionally, inflating conduits or hoses (21 and 23), at their free ends, are provided with coupling means (24a, 24b and 24c) respectively suitable to couple said inflating conduits or hoses (21 and 23) to tyre valve and thereby proceed to the inflating or pressure checking of the corresponding tyre. As it may be observed, the coupling means (24c) for vehicles with two wheels has a 90°-bended shape in order to facilitate its coupling to the tyres of said vehicles.

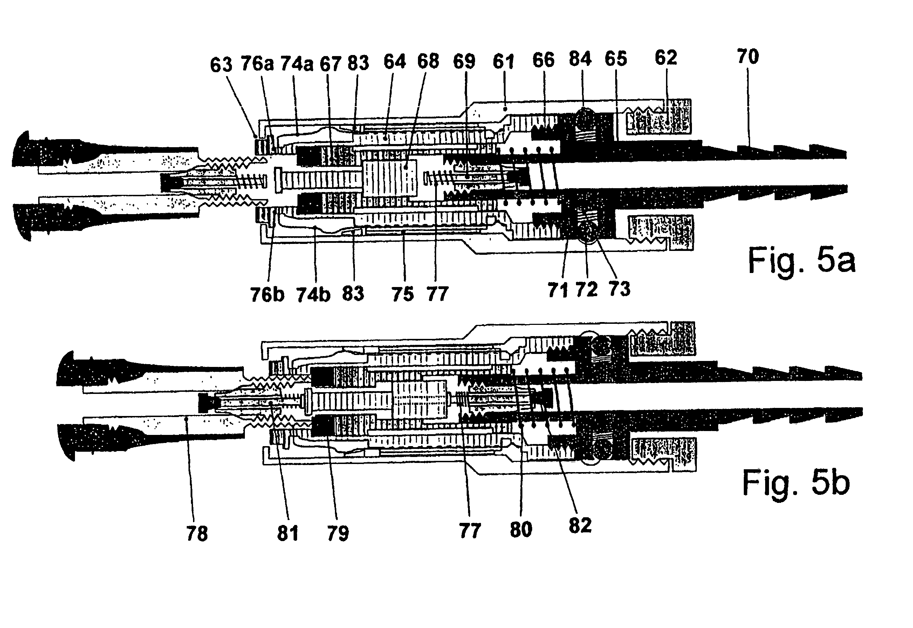

Figures 5a and 5b represent, in detail, the cross-section of said coupling means suitable to couple said inflating conduits or hoses (21) to tyre valve (78), constituted by a coupling nozzle, suitable to its easy and fast connection and disconnection of hoses with valves (78) in wheels, defined by a small diameter cylindrical configuration with a lenght suitable to reach the valve (78), in the case of the latter is lodged in a cavity, which is provided with automatic lockage means suitable to avoid air escape when nozzle is not connected to the valve (78).

More concretely, said coupling nozzle comprises a cylindrical shaped external piece or slide (61) closed at its rear side by a screw cap (62), in whose opposite end it is provided with a circular opening (63) suitable to get into the valve (78). Inside said external piece or slide (61), two pieces (64, 65) are lodged sliding in relation to the first (61) and mounted one with the other preferably by a screwed joint (66). Inside one of said pieces (64), the nearest to tyre valve (78), a hollow, internally stepped tubular piece (67) is lodged sliding in relation to said piece (64) which lodges it, and lodging a hammer (68) consisting of a cylindrical rod which has a widening with a polygonal, preferably hexagonal, cross-section, suitable to avoid the return inside said tubular piece (67) as well as to allow an air current between interstices existing between polygon chords and circular section of the tubular piece (67). Said tubular piece (67) has, in its end nearest to tyre valve (78), a rubber conical seal (79), suitable to plug the air inlet hole. Finally, said tubular piece (67) has two "L"-ended springs (74a, 74b) fastened by an external cylindrical collar (75). The "L"-end of said springs (74a, 74b) is introduced in several grooves (76a, 76b) made on said tubular piece (67) nozzle. On the other hand, the second (65) of said pieces lodged in the external piece or slide (61), that nearest to the air inlet through the external conduit or hose, has a cylindrical hollow inside, and it has a valve core (69) screwed in its fore end, similar to those lodged in vehicle valves, at whose free end it has a little spring (77) and its rear portion externally ends in a series of, preferably culvertail shaped, projections (70), which is suitable for a leakproof coupling to the external air conduit or hose, through which air from working unit or machine (1) flows. Likewise, said piece (65) has a circular crown-shaped internal widening (71) which has four balls (72) diametrally and normally opposite two by two, embedded and pressed by springs (73), said balls (72) being faced to an inner groove (84) made in said external piece or slide (61). Next to said circular crown-shaped internal widening (71) and faced to the inside of the coupling nozzle, an inner spring (80) is arranged surounding the tubular outside of said piece (65), suitable to integrally move both pieces (64, 65) lodged in said external piece or slide (61), and thereby draw said balls (72) out from the corresponding grooves (84). Finally, the external piece or slide (61) is inside provided with a collar (83) shaped like a truncated cone, suitable to press said "L"-ended springs (74a, 74b) when the integral set formed by the pieces (64, 65) has moved to a stop resulting from the screw cap (62) closing said external piece or slide (61).

Figure 5b shows a cross-sectioned view of the nozzle for coupling the inflating conduits or hoses to tyre valve (78) at its loading condition, i.e., when all air inlets are open, which will facilitate the understanding of said coupling nozzle operation.

Vehicle valve (78) is introduced by the fore end of coupling nozzle, through the inside of the piece (64) lodged into the external piece or slide (61), pushing the hammer (68), which internally slides along the tubular piece (67) lodged into said piece (64). Hammer (68), along its movement, pushes the internal piston of valve core (69), thereby overcoming the resistance of its internal spring (77), and opening the air inlet hole (82), originally closed by the rubber conical seal (79), so begining to move said tubular piece (67), which has to overcome the resistance of spring (80) surrounding the tubular outside of the second piece (65) lodged into the external piece or slide (61), untill it begins to move the integral set of pieces (64, 65), thereby drawing balls (72) out from the corresponding grooves (84).

Resistances of said springs (77, 80) are transmitted in the opposite sense to the rod (81) of valve core in tyre valve (78), which results opened, thereby allowing air to flow.

When the integral set formed by pieces (64, 65) lodged into the external piece or slide (61) has moved up to the stop resulting from the screw cap (62) closing said external piece or slide (61), springs (74a, 74b) integral with the piece (64) are pressed by a collar (83) shaped like a truncated cone located into the external piece or slide (61), so that the "L"-shaped end of said springs (74a, 74b) juts out the corresponding grooves (76a, 76b) clamp-wise embrazing the valve (78), entering into the strias of the same and avoiding it to return.

In this position, shown in figure 5b, with the valve (78) clogged, air flow is free all along the run, and on the other hand, coupling nozzle is in a stable position, which can be unblocked only by pulling the external piece or slide (61), disconnecting said "L"-ended springs (74a, 74b), balls (72) entering again into their corresponding grooves (84), the air flow conduits being closed back again by means of springs, the whole set becoming to the rest position and vehicle valve (78) being loose.

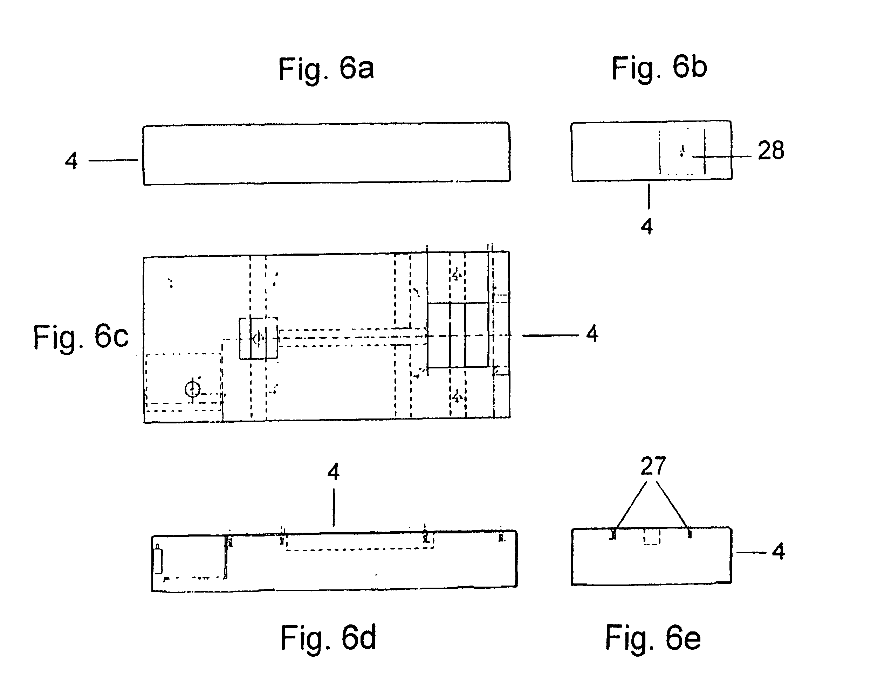

Figures 6a, 6b, 6c, 6d and 6e show different views of the basis or supporting unit (4), consisting of a socle or pedestal, appropriate to support the working unit or machine (1) and the air delivering unit (5). Said support or basis is parallelopipedic-wise shaped, open at its lower face, made of steel plate, Likewise, it is provided with means for fixing to the ground by screws (27) and retaining billets (not shown in figure) as well as for fixing on said basis upper surface a working unitor machine (1) and an air delivering unit (5) by means of bolts and nuts.

Said basis may optionally have a small gate (28) for having access to the coin box existing inside the machine.

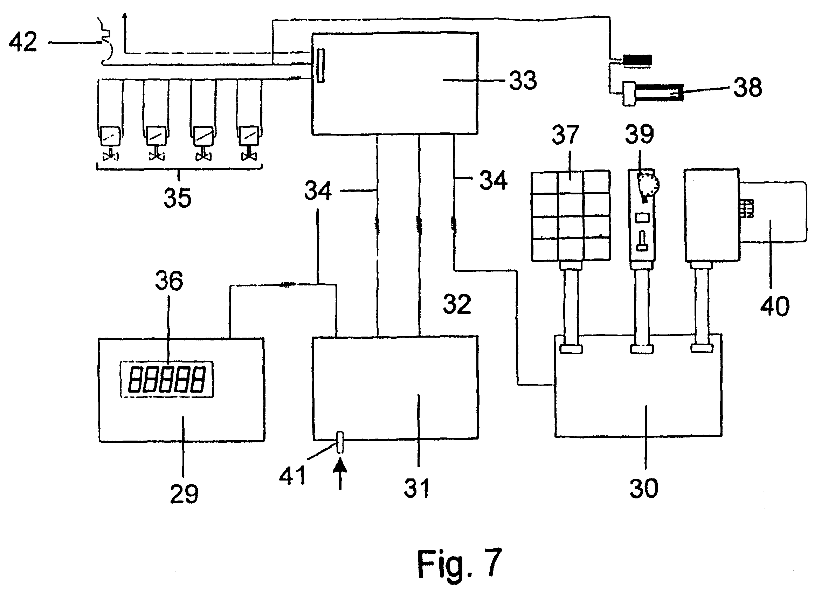

Figure 7 shows an electronic scheme of the measuring instrument of the working unit or machine (1). Said working unit (1) is constituted by an electronic set formed by three intelligent modules, such as a visualizer-supervisory module (29), a keyboard module (30) and an adjustment module (31), independently operated, each one having a microcontroller for the execution of processes commended to each module, preferably communicated by two wires in accordance with the specifications of the corresponding communication bus (32), as well as a pneumatic control and power supply module (33) providing energy for operation of the remaining modules through a corresponding power supply bus (34), simultaneously managing the pneumatic equipment (35).

Said visualizer-supervisory module (29) of the measuring instrument is constituted by a microcontroller, a series-parallel interface for managing the visualizer, a visualizer (36), a write protected memory, a power supply control circuit, an infrared receiving circuit, a battery and a charge circuit. Said module is in charge of presenting the pressure measure, in an intelligible manner, outside, storing the information enterred from outside through the keyboard module (30), as well as supervising the system operation, managing information received from the remaining modules, deciding the process to be effected, and sending the appropriate commands through the data communication bus (32) to the remaining modules.

Keyboard module (30) is in charge of receiving commands from outside and communicating them to the visualizer- supervisory module (29) for their interpretation and for acting in accordance with the criterion established by a program, and it is provided with a microcontroller. A keyboard (37) an interface between said microcontroller and the keyboard (37), preferably constituted by transistors, light indicators (38) and, optionaly, with cashing means, either by coins (39) or by credit cards, money cards or the like (40). Detection of activation of a key, approval of a card-transaction or coin-acceptance are communicated by the data communication bus (32) to the visualizer-supervisory module (29), said visualizer supervisory module (29) determining the process(es) to be effected, including commands to the keyboard module (30) for activating or disabling either the light indicators (38) or the card (40) [or coin (39)] acceptor.

Adjustment module (31) is in charge of recovering information about pressure and converting said information into digital information; it has a microcontroller, an analogical-digital converter with differential input, a low noise linear amplifier and a pressure transducer (41). Said adjustment module (31) converts information regarding to barometric pressure into a numerical digital value, operates the pneumatic system (35) electrovalves and manually or automaticaly carries out those necessary pressure-adjustment processes to achieve a desired pressure.

Finally, the pneumatic control and power supply module (33) consists of and circuit in charged of supplying the necessary energy to each one of the fore-mentioned modules for a correct operation thererof; it has voltage stabilizers such as, preferably, a circuit with a transistor and protection means, such as a filter (42) located at AC input in order to avoid the production of radiofrecuence interferences. Aditionally, it is provided with a power supply monitoring system, suitable to detect voltage drops below a safety value, and it supplies a initialization signal to modules. Finally, it includes a power control for managing the pneumatic equipment (35) by, preferably, optocoupling triacs allowing power in said pneumatic equipment (35) or not, as well as a monitoring of the correct operation of said pneumatic equipment (35).

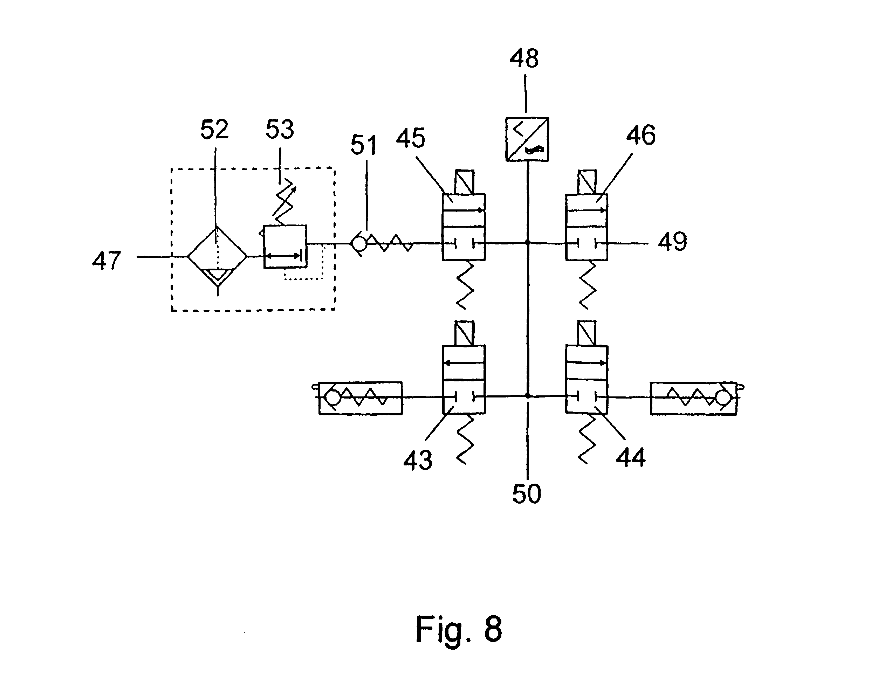

Figure 8 shows the pneumatic scheme of the present practical embodiment of the electronic air-supplying and pressure-equalizer system for tyres object of the present invention. Said pneumatic equipment (35) of the working unit or machine (1) is the element in charge of managing the air flow which will permit to fill up or to empty tyres untill achieving a desired pressure. The pneumatic equipment (35) consists of four electrovalves (43, 44, 45, 46) communicating inflating conduits or hoses (21) with the pressure source or compressor (47), or with the atmosphere (49). Said electrovalves join together in a common node (50), to which said measuring instrument joins too said pressure transducer (48) converts a pressure value existing at said common node (50) into an electrical signal which is sent to the electronic measuring instrument.

Two of said electrovalves (43, 44) work simultaneously and are in charge of connecting distribution and connetion means, such as inflating conduits or hoses (21), coming from vehicle tyre valves, to said common node (50), so achieving a double effect. On one hand, pressures into both tyres get equal and at the same time, it is possible to measure the pressure of the grip between the wheels. The use of two electrovalves (43, 44) does not permit the cross balancing of wheels as hoses (21 )change between one axle and an other.

Once the above set of tyre connected electrovalves is open, one of the two remaining electrovalves (45) joins the common node (50) with the pressure source compressor in order to thereby increase pressure.

Alternatively once the above set of tyre connected electrovalves is open, the second of the two remaining electrovalves (46) joins the common node (50) with the atmosphere in order to thereby decrease pressure.

Pneumatic set (35) is complemented with several means for protecting the measuring instrument against water and dirtiness existing in the installation and/or in the pressure source or compressor (47) as well as against pressures higher than those said measuring instrument can support, such as, a filter (52) and a regulator (53). located between the pressure source or compressor (47) and a non-return valve (51), which is situated ahead the electrovalve (45) controlling input of compressed air to the common node (50), said non return valve equipped in order to avoid that, in absence of pressure inside the pressure source or compressor (47), tyres deflate.

The pressure source or compressor (47) (not shown in figures) of the electronic air-supplying and pressure-equalizer system for tyres provides dry air at a pre-established minimum pressure. Said pressure source or compressor (47) can be either interior, so suitably sizing the outer housing in order to lodge said pressure source or compressor (47), or external, in which case, a larger and therefore more powerful compressor can be used, thereby favouring the response time of the system.

The electronic air-supplying and pressure-equalizer system for tyres object of the present invention whose configuration has been disclosed above, is provided with different modes of working which user can choose. The three modes of working which the electronic air-supplying and pressure-equalizer system for tyres has are: checking-balancing mode, manual inflating-balancing mode and automatic inflating-balancing mode.

The user begins the working of the electronic air-supplying and pressure-equalizer system for tyres by connecting inflating conduits or hoses (21) to vehicle tyre valves through coupling nozzles (24a, 24b) introducing these into the valves in tyres. Once this connection process is effected, it will be necessary to wait for a moment untill reading becomes stabilized. This time is the required for pressure values inside both wheels to become equal, in the case of two wheels at each axle. Next, it should be selected whether to increse or decrease pressure based on the pressure being visualized and pressure that is aimed to reach. Once decision has been taken, it is possible to work the appropriate valve in each case. Time that this action should take will depend on various factors, the most remarkable being the difference between current pressure and pressure to be reached, the difficulty for air to pass through the pneumatic system, and the pressure of pressure source or compressor supplying the air necessary in case of desiring to increase the barometric value. Since it seems to be difficult to achieve the desired pressure by activating only once the appropriate electrovalve for a determinate time, generally, an electrovalve should be worked, then it should be waited untill pressure becomes stabilized and a new decision is taken about the action to do, which will depend, as before, on the pressure value read and that to be reached. Once decision is taken, the appropriate electrovalve should be worked, said process being repeated so many times as it were necessary, untill desired pressure is achieved.

In relation to the handling by the user, this can decide between being him/her-self who compares, takes the decision and repeatedly acts on the machine (manual mode) or letting the machine to be itself which carries out the process (automatic mode), the pressure value desired to be achieved being previously fixed through the keyboard (37), either by directly introducing the value, or by preselecting one of the pre-established values arranged on the keyboard (37) or by a remote control. Likewise, user has the possibility to check and equalize pressures inside the tyres of the same vehicle axis.

The electronic air-supplying and pressure-equalizer system for tyres is provided with an acoustic warning device which indicates by an acoustic signal that system has finished the inflating-balancing process, so the pre-determined value being reached, when said system works at the automatic inflating-balancing mode.

Finally, the electronic air-supplying and pressure-equalizer system for tyres object of the present invention is provided with different selectable cashing means such as free mode or payment mode as selected by system's operator and, when choosing the payment mode, it is provided with various options: coin payment (39) or card payment (40), either with a proprietary card comprising a determined number of services or with a money-card of any bank, eligible by the user. Said coin-box (39) comprises a groove through which the necessary coin(s) should be introduced in order to switch the system on. In the case of a defective coin were introduced and blocked up, it will be recovered by pressing the return button located below said groove, thereby coin will appear in a box located below said button. Likewise, if coin were unappropriate or system were either unplugged from the network or on working, said coin would be automatically returned.

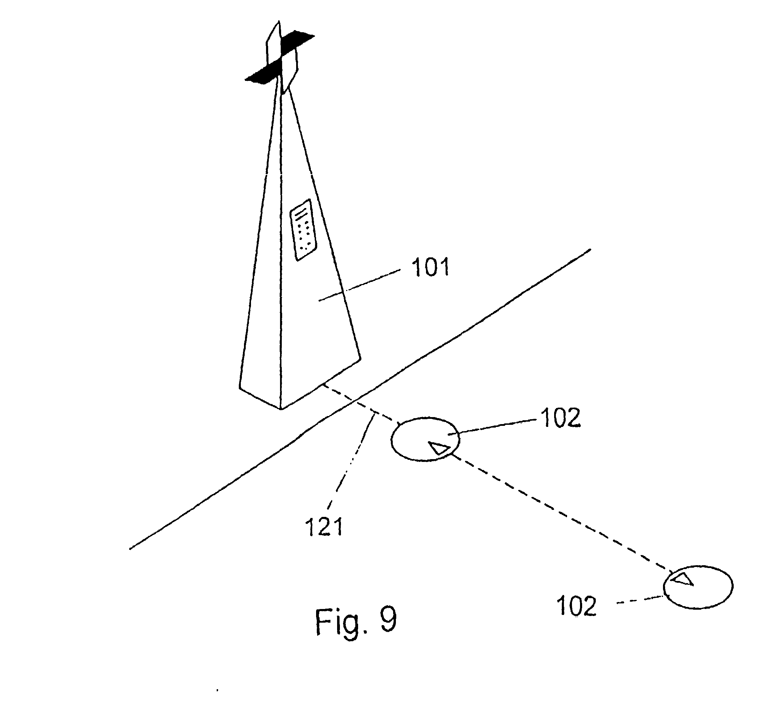

Figures 9 to 12 show alternative embodiments of the unit of distribution of the electronic air-supplying and pressure-equalizer system for tyres object of the present invention.

Figure 9 diagramatically shows a second preferred embodiment of the electronic air-supplying and pressure-equalizer system for tyres not belonging to the invention, having a series of inflating conduits or hoses (121) carrying inflating gas, preferably compressed air, coming from the working unit (101) of the kind disclosed above.

Said second practical embodiment consists of two inflating modules or devices (102) doing the following functions: support of said inflating conduits or hoses (121), location of said inflating conduits or hoses and coupling thereof to vehicle tyres to be inflated or whose pressure is desired to check, and automatic withdrawal and/or return of said inflating conduits or hoses (121) from a working position up to a rest position. Pressure control of each tyre is carried out through a working unit (101), similar to that disclosed in figures 1 to 8. The pair of inflating modules or devices (102) are located in diametrally opposite positions, so that the user who desires to use the electronic air-supplying and pressure-equalizer system for tyres should park the vehicle between both inflating modules or devices (102), each one of the inflating modules or devices of rear and fore tyres being approximately equidistant to each corresponding side of the vehicle. Said inflating modules or devices (102) are placed at a gap of, preferably, between 1.75 m and 2.80 m, more preferably between 1.90 m and 2.50 m between themselves, and, in any case, according to the width of vehicles to operate with the present inflating installation.

Inflating conduits or hoses (121) extend from the working unit or machine (101) to inflating modules (102) through underground pipes.

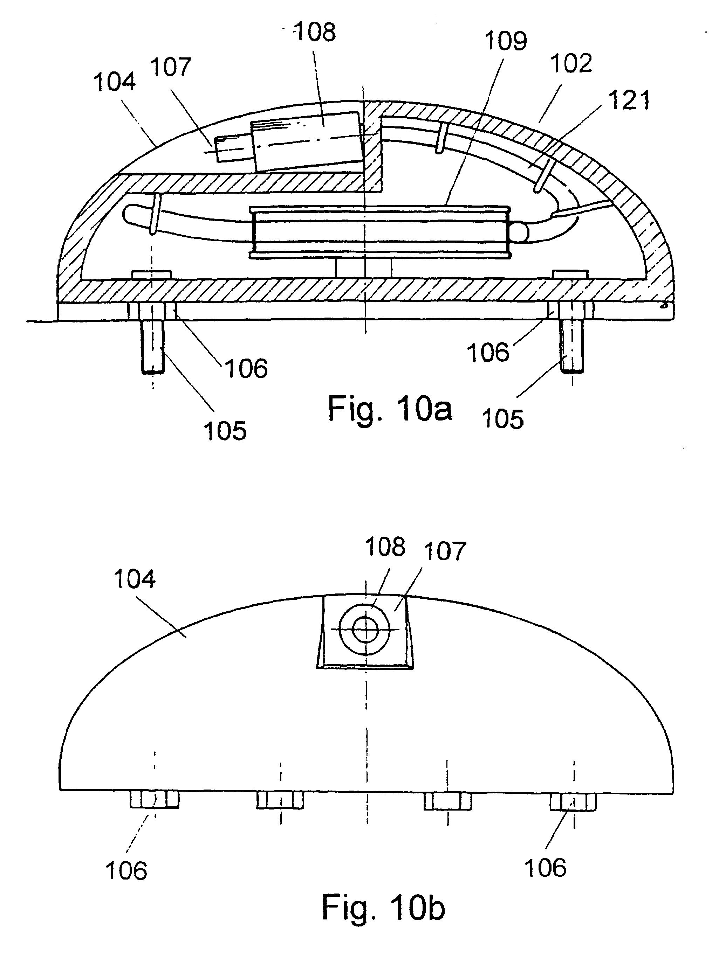

Figures 10a and 10b diagrammaticaly show different views of inflating modules or devices (102), which have a housing made of a resistant material, preferably metal or the like, shaped as a semi-spherical cap, in whose inside an extensible inflating conduit or hose (121) is lodged, said housing (104) being thereby constituted as the means for supporting said inflating conduit or hose (121). Said housing (104) has, at its lower side, means for the anchorage and fixing to the ground, preferably constituted by threaded screws (105) introduced into the ground, secured by conventional nuts (106). Likewise, said housing (104) has, on its upper surface, an outlet hole (107) to extract the inflating conduit or hose (121) and to thereby couple the inflating valve (108), arranged at its free end, to tyre valve.

Likewise, inside said housing (104), there are automatic means for the returning and withdrawal of the inflating conduit or hose (121) lodged therein, constituted by a channeled wheel (109) horizontally arranged with a device of springs which makes it to automatically revolve in a sense, so that the conduit or hose (121) used, which is stretched and extracted from the housing (104), is withdrawn up to a rest position by said automatic coiling means.

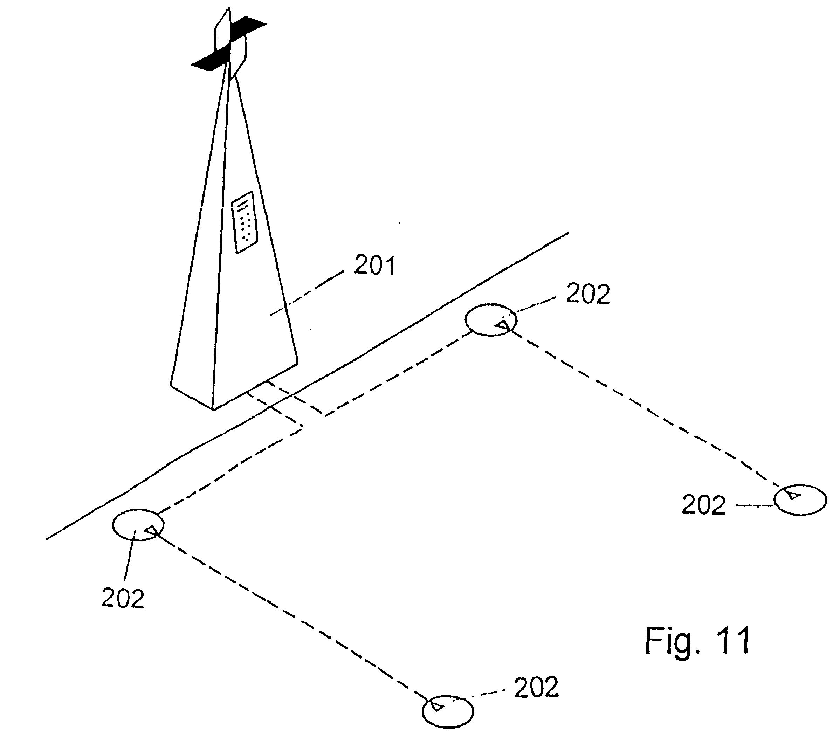

Figure 11 shows a third preferred embodiment of the electronic air-supplying and pressure-equalizer system for tyres not belonging to the invention, similar to that shown in Figure 9, which is provided with four inflating modules or devices (202) identical to those disclosed above distributed on an imaginary rectangle, in order to work one vehicle tyre from each one, so that the user who wants to use the inflating installation should park the vehicle on said imaginary rectangle, placing each one of the vehicle tyres approximately equidistant to the corresponding inflating module or device. Again, pressure control of each tyre is carried out through a working unit or machine (201). As in foregoing cases, gaps have to be suitable to park the vehicle on said imaginary rectangle, allowing an appropriate manoeuvrability margin.

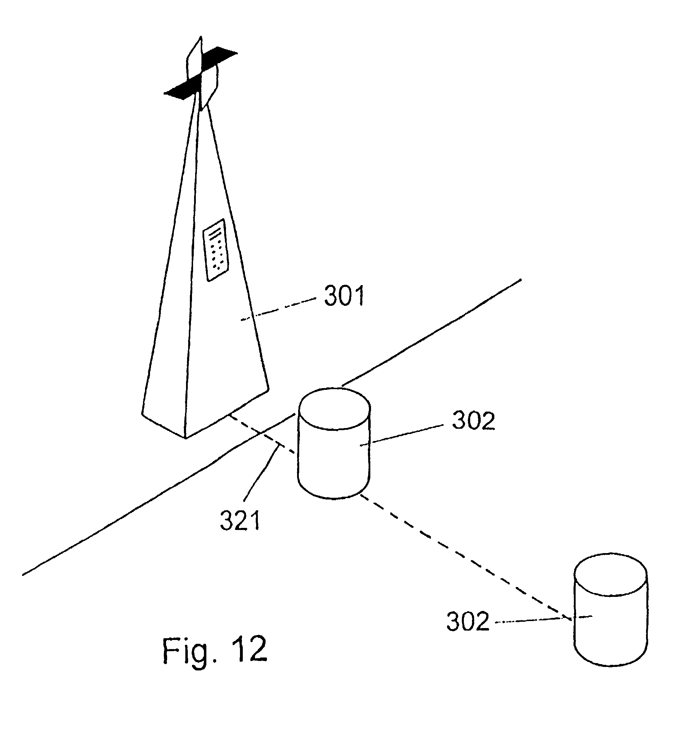

Finally, figure 12 shows a fourth practical embodiment of the electronic air-supplying and pressure-equalizer system for tyres not belonging to the invention similar to that shown in figures 9 and 11, in which inflating modules or devices have a cylindrical shape (302) as a body emerging from the ground up to certain height, allowing the handling thereof by user without crouching, being inside provided with each one of the elements disclosed for the inflating module or device of the latter embodiment, regarding to figures 10a and 10b. As in foregoing embodiments, inflating hoses extend underground from the working unit or machine (301) to the inflating modules or devices (302).

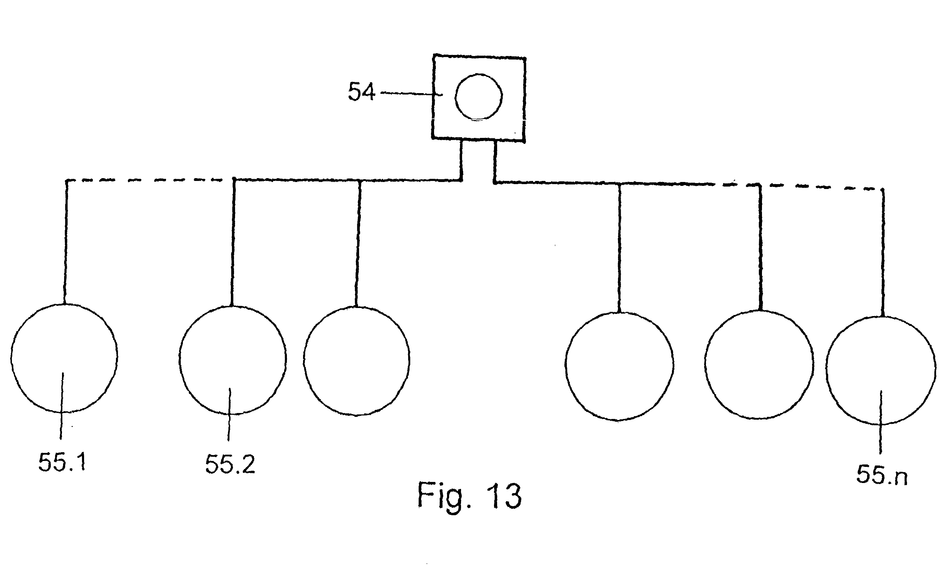

As represented in figure 13, the electronic air-supplying and pressure-equalizer system for tyres can consist of a multi-station, multi-user and multi-function system. In this case, system comprises a central managing centre (54), as well as a set of autonomous use terminals (55.1, 55.2,... 55.n), subjected to said managing centre (54). The various elements disclosed above for individual systems will be distributed among the various components of said multi-station system. Therefore, managing centre (54) will comprise a compressor, owning to the centre where it is installed on, an overall control circuit suitable to carry out the acceptance of cashing means, store transactions, control service times, and manage communications, as well as a communication module, preferably via modem. Autonomous use terminals (55.1, 55.2,... 55.n), will be provided with a visualization device, a pressure control, a keyboard control, a payment control including a money box and a card reader, as well as a pressure transducer. The particular disposal as well as the features of each one of the autonomous terminals (55.1, 55.2,... 55.n) may adopt any one of the embodiments mentioned above. The so suggested multi-station configuration may complement the inflating and pressure control fuctions of each autonomous terminal (55.1, 55.2,... 55.n) with further functions, typical of a car-washing centre such as washing, vacuum cleaning, rug cleaning, etc.

Once the nature of the present invention, as well as several ways for bringing it into practice have been sufficiently disclosed, it only remains to add that it is possible to introduce, in its whole or parts, variations in shape, materials and disposal, provided that said variations would not substantially change those features of the invention which are claimed below.

## Claims

1. Electronic air-supplying and pressure-equalizer system for tyres, to be installed at gas stations, service areas, mechanical assistance points on roads or the like, the system being provided with:
a) a basis or supporting unit (4), parallelepipedic-wise shaped, open at its lower face, preferably made of steel plate, and provided with means for fixing said basis to the ground by screws (27) and retaining billets, and including means for fixing on said basis upper surface a working unit or machine (1) and an air delivering unit (5) by means of bolts and nuts;
b) said working unit or machine (1), having:
a housing (2) of regular quadrangular pyramidal shape, made, at one of its sides (6d), of metal terne plate and, at the remaining sides (6a, 6b, 6c), made of high density expanded stiff polyurethane resin, being provided at said metal side (6d) with one or more gates (7a, 7b), suitable to allow access to inner elements, said housing (2) being further provided with ventilation means constituted by air inlet screens (9, 10) preferably located at the upside and downside of said housing (2); a metal framework (11), consisting of a metal structure preferably made of L-shaped profiles (12), as well as means for fixing the housing thereto, preferably constituted by screws;
an electronic measuring instrument, constituted by an electronic set formed by three intelligent modules, such as a visualizer-supervisory module (29), a keyboard module (30) and an adjustment module (31), and a pneumatic control and power supply module (33), as well as buses for power supply (34) and data communication (32) between said modules; and
a pneumatic equipment (35) consisting of four electrovalves (43, 44, 45, 46), commanded by the pneumatic control and power supply module (33), the first two electrovalves (43, 44) suitable to communicate two inflating conduits or hoses (21) of said air delivering unit (5) individually to a common node (50), said common node (50) being communicated alternatively by means of two respective further electrovalves (45, 46) with a pressure source or compressor (47), or with the atmosphere (49), said further two electrovalves (45, 46) being connected to said common node (50) as well as to a pressure transducer (48) that converts a pressure value existing at said common node (50) into an electrical signal which is sent to the electronic measuring instrument; there are between the pressure source or compressor (47) and a corresponding one of said further electrovalves (45) a filter (52), a pressure regulator (53) and a non-return valve (51),
c) whereby said air delivering unit (5) is mounted on said basis (4) and acts as intermediary between the pneumatic equipment (35) of the working unit or machine (1) and tyre valves, by means of said two inflating conduits or hoses (21); and
d) whereby said pressure source or compressor (47) can be equipped inside or outside of the housing (2) of the working unit or machine (2),
**characterized in that** the system further includes the following elements:
(a) an infrared signal receiver connected to said visualizer -supervisory module (29) for receiving information about selected inflating pressures from a first remote control;
(b) a structure for supporting said inflating conduits or hoses (21), said structure being included in the air delivering unit (5), and consisting of a support (13), a gyratory arm (14) and location means (17) consisting of rotation means for said gyratory arm (14) at the upper end of said support (13);
(c) means for automatic return or withdrawal (25a, 25b) of said inflating conduits or hoses (21) from a working position to a resting position, thus avoiding deterioration and dirtiness, said means being included in the air delivering unit (5); and
(d) coupling means provided at the free ends of said conduits or hoses (21) for coupling said inflating conduits or hoses (21) to tyre valves, said coupling means consisting in coupling nozzles (24a, 24b).

2. Electronic air-supplying and pressure-equalizer system for tyres, according to claim 1, **characterized in that** the visualizer-supervisory module (29) of the measuring instrument is constituted by a microcontroller, a visualizer (36) fixed on the fore side (6c) of the working unit or machine (1), a series-parallel interface for managing the visualizer (36), a write protected memory, a power supply control circuit, a battery and a charge circuit, said visualizer-supervisory module (29) being capable of presenting outside the pressure measure, in an intelligible manner, storing information entered from outside through the keyboard module (30), and supervising the system operation, capable of managing information received from the remaining modules, deciding what process is to be effected, and sending appropriate commands through the data communication bus (32) to the remaining modules.

3. Electronic air-supplying and pressure-equalizer system for tyres, according to claim 1, **characterized in that** the keyboard module (30) in the measuring instrument is provided with a microcontroller, a keyboard (37) fixed on the fore side (6c) of the working unit or machine (1), an interface between said microcontroller and the keyboard (37), light indicators (38) and cashing means by coins (39), credit cards, money cards or the like (40), said keyboard module (30) being suitable to receive commands from outside and to communicate them to the supervisory module (29) for their interpretation and execution, as well as for detection of the activation of a key.

4. Electronic air-supplying and pressure-equalizer system for tyres, according to claim 1, **characterized in that** said remote control suitable to select an inflating pressure, comprising either a numerical keyboard, suitable for introducing any pressure value, or one single key containing recorded a value associated with the optimum pressure of a particular vehicle tyre, a converter of electrical signals generated by said keyboard into infrared waves, and a transmitter of said waves, capable of emitting a signal corresponding to the value introduced by said keyboard or key of said remote control, to the infrared receiving circuit installed in the working unit or machine (1), said signal receiving circuit being provided with a signal transducer capable of converting the infrared signal received, into an electric signal, and with means for transmission to the visualizer-supervisory module (29) of the measuring instrument.

5. Electronic air-supplying and pressure-equalizer system for tyres, according to claim 1, **characterized in that**:
- said first two electrovalves (43, 44) of said pneumatic equipment (35) work simultaneously and are capable of connecting distribution and connection means, such as hoses (21), coming from vehicle tyre valves, to said common node (50);
- one of said further electrovalves (45) is capable of, once the above set of tyre electrovalves is opened, connecting the common node (50) with the pressure source or compressor (47).
- the second of said further electrovalves (46) is capable of, once the above set of tyre electrovalves is opened, joining the common node (50) with the atmosphere.

6. Electronic air-supplying and pressure-equalizer system for tyres, according to claim 1, **characterized in that** said structure for supporting of said air delivering unit (5) consists of the gyratory arm (14) having a L-shaped tubular piece comprising a vertical piece (14a) and an horizontal piece (14b), preferably made of a metallic material or the like, and the support (13) consisting of a hollow tube made of painted steel, supported, at its lower end, by the basis or supporting unit (4) to which is fixed by means of an anchorage plate (15), said first vertical tubular piece (14a) extending from its upper end the second tubular horizontal piece (14b) describing a 90° curve until getting horizontal, i.e., parallel to the ground, having a section narrower than that of the fore piece, and a diagonal bar (16) for supporting and reinforcing said horizontal tubular piece (14b), and **in that** said inflating conduits or hoses (21) run through the inside of said supporting structure, entering through its basis and a inflating conduit or hose (23) for vehicles with two wheels going out through a lateral hole (22) arranged on said support (13), and the inflating conduits or hoses (21) for vehicles with three or more wheels each going out through holes (19, 20) arranged below on both ends of the upper horizontal tubular piece (14b), said inflating conduits or hoses (21) having a gap of, preferably between 1.75 m and 2.80 m; more preferably between 1.90 m and 2.50 m, and the horizontal tubular piece having a height of, preferably, more than 1,70 m from the floor plan.

7. Electronic air-supplying and pressure-equalizer system for tyres, according to claim 1, **characterized in that** said location means consist of means for rotating around a point of coupling between both tubular pieces of the supporting structure, the support (13) and the gyratory arm (14), preferably constituted by a nylon bearing (17) composed of two coupled cylinders (17a, 17b), slant wise cross-sectioned, which allow a preferably 90°-180° rotation of the upper tubular piece (14b) around the lower tubular piece (14a), from a resting position considered as that in which the upper horizontal tubular piece (14b) is substantially placed parallel to the longitudinal axis of a vehicle parked next to the electronic air-supplying and pressure-equalizer system for tyres, up to a working position, considered as that in which the upper horizontal tubular piece (14b) is substantially placed perpendicular to the longitudinal axis of a vehicle parked next to the electronic air-supplying and pressure-equalizer system for tyres, with automatic gravitational return from said working position to said resting position.

8. Electronic air-supplying and pressure-equalizer system for tyres, according to claim 1, **characterized in that** said means for automatic return or withdrawal of the inflating conduits or hoses (21) from a working position to a resting position, each consist of vertical coilings (25a, 25b) for sustenance, return or withdrawal of inflating conduits or hoses (21), hanging from the horizontal tubular piece (14b) of the supporting structure.

9. Electronic air-supplying and pressure-equalizer system for tyres, according to claim 1, **characterized in that** it is provided with an acoustic warning device which indicates by an acoustic signal that the system has finished the inflating-balancing process, upon the pre-selected value being reached.

10. Electronic air-supplying and pressure-equalizer system for tyres, according to claim 1, **characterized in that** it is capable of working with different eligible cashing modes, consisting of:
a) a free mode; and
b) a payment mode, provided with the following options eligible by the user: coin payment mode (39) or card payment mode (40), either with a proprietary card comprising a determined number of services or with a money-card of any bank.

11. Electronic air-supplying and pressure-equalizer system for tyres, according to claim 1, **characterized in that** the system includes second remote control means to permit remote operation, said remote control means including a modem establishing communication between a central station and the system.

12. Electronic air-supplying and pressure-equalizer system for tyres, according to claim 1, **characterized in that** it is provided with a transmitter-receiver system operated by infrared or other electromagnetic type waves, a transducer for converting the infrared signal into an electrical signal and means for transmitting to the visualizer-supervisory module (29), suitable to work together with external signal sources measuring those parameters on which inflating pressure depends, such as temperature.

13. Electronic air-supplying and pressure-equalizer system for tyres, according to claim 1, **characterized in that** said coupling nozzles (24a or 24b, 24c respectively) comprise a cylindrical shaped external piece or slide (61) closed at its rear side by a screw cap (62), in whose opposite end it is provided with a circular opening (63) suitable to get into tyre valve (78); inside said external piece or slide (61), two pieces (64, 65) are lodged sliding in relation to the first (61) and mounted one with each other preferably by a screwed joint (66).

14. Electronic air-supplying and pressure-equalizer system for tyres, according to claim 1, **characterized in that** inside one of said pieces (64) lodged into the external piece or slide (61), nearest to tyre valve (78), a hollow, internally stepped tubular piece (67) is lodged sliding in relation to said piece (64) which lodges it, and lodging a hammer (68) consisting of a cylindrical rod which has a widening with a polygonal, preferably hexagonal, cross-section, suitable to avoid the return inside said tubular piece (67) as well as to allow an air current between interstices existing between polygon chords and circular section of the tubular piece (67), said tubular piece (67) having, in its end nearest to tyre valve (78), a rubber conical seal (79), suitable to plug the air inlet hole, as well as two "L"-ended springs (74a, 74b) fastened by an external cylindrical collar (75) and several grooves (76a, 76b) made on the nozzle of the tubular piece (67), suitable to lodge the "L"-shaped end of said springs (74a, 74b).

15. Electronic air-supplying and pressure-equalizer system for tyres, according to claim 1, **characterized in that** the second of said pieces (65) lodged into the external piece or slide (61), the nearest to the air inlet through the external conduit or hose (21), has a cylindrical hollow inside, and it has a valve core (69) screwed in its fore end, similar to those lodged in vehicle valves, at whose free end it has a little spring (77) and its rear portion externally ends in a series of culvertail shaped, projections (70), which is suitable for a leakproof-coupling to the external air conduit or hose (21), through which air from the working unit or machine (1) flows, said piece (65) further having a circular crown-shaped internal widening (71) which has four balls (72) diametrically and normally opposite two by two, embedded and pressed by springs (73), said balls (72) being faced to an inner groove (84) made in said external piece or slide (61), an inner spring (80) being arranged, next to said circular crown-shaped internal widening (71) and faced to the inside of the coupling nozzle, surrounding the tubular outside of said piece (65), suitable to integrally move both pieces (64, 65) lodged in said external piece or slide (61), and thereby draw said balls (72) out from the corresponding grooves (84).

16. Electronic air-supplying and pressure-equalizer system for tyres, according to claim 1, **characterized in that** said external piece or slide (61) is inside provided with a collar (83) shaped like a truncated cone, suitable to press said "L"-ended springs (74a, 74b) when the integral set formed by the pieces (64, 65) has moved to a stop resulting from the screw cap (62) closing said external piece or slide (61).

17. Electronic air-supplying and pressure-equalizer system for tyres, according to claim 1, **characterized in that** it has a distributed multi-station configuration comprising a set of autonomous use terminals (55.1, 55.2,... 55.n), subjected to said managing centre (54), said managing centre (54) comprising a compressor, an overall control circuit suitable to carry out the acceptance of cashing means, store transactions, control service times, and manage communications, as well as a communication module, preferably via modem with the autonomous use terminals (55.1, 55.2,... 55.n).

## Patentansprüche

1. Elektronisches Luftzulieferungs- und Luftdruckausgleichsystem für Reifen, zum einbauen in Tankstellen, Raststätte, Werkstätte auf Landstrassen oder ähnliche, das System ist mit folgendem versehen:
a) eine Basis oder Stützanlage (4) mit paralleloipedischer Form, offen an ihrer unteren Seite, vorzugsweise aus einer Stahlplatte gemacht, und versehen mit Mitteln und mit Behaftungshölze um die genannte Basis am Boden mit Schrauben zu befestigen (27), und einschliessend Mitteln um eine Arbeitsanlage oder Maschine (1) und eine Luftlieferungsanlage (5) mittels Schrauben und Schraubenmutter auf der oberen Seite der genannten Basis zu befestigen.
b) die gennante Arbeitsanlage oder Maschine (1) sollte mit folgendem versehen sein:
ein Gehäuse (2) regulärer quadratischer pyramidaler Form, an einer Ihrer Seiten (6d) aus Ternmetallplatte gemacht, und an den restigen Seiten (6a, 6b, 6c) aus ausgedehntem steifem Poliurethanharz hoher Dichte gemacht, an der genannten Metallseite (6d) mit einer oder mehr Türen (7a, 7b)versehen, geeignet um den Zugang zu inneren Elementen zuzulassen, das genannte Gehäuse ist ausserdem mit Ventilationsmitteln versehen, die aus Luftzugangsschirme (9, 10) gebildet sind, die vorzugsweise an der oberem und unteren Seite des genannten Gehäuse (2) liegen;
einen Metallrahmen (11), der aus einer Metallstruktur besteht die vorzugsweise aus L-förmige Profile (12) gemacht wird, und auch versehen mit Mitteln, vorzugsweise Schrauben, zum Befestigen des Gehäuses dazu;
ein elektronisches Messungsinstrument, der aus einem elektronischen Satz besteht und dieser aus drei intelligente Module gebildet wird, wie ein Anzeigerbeaufsichtigungsmodul (29), ein Tastaturmodul (30) und ein Einstellmodul (31), und ein pneumatisches Stromzulieferungs- und Kontrollmodul (33), sowohl als Steckdosen für Stromzulieferung (34) und Datenkommunikation zwischen den genannten Module;
eine pneumatische Anlage (35), die aus vier Elektroventile besteht (43, 44, 45, 46), die von den Strohmzulieferungs- und Kontrollmodul (33) geführt werden, die zwei ersten Elektroventile (43, 44) sind dazu geeignet, zwei Aufblasleitungen oder -röhre (21) dieser Luftzufuhranlage (5) mit einem gemeinsamen Knoten (50) zu verbinden, dieser gemeinsame Knoten (50) ist abwechselnd durch zwei respektive weitere Elektroventile (45, 46) mit einer Luftdruckquelle oder Kompressor (47) verbunden, oder mit der Atmosphäre (49), und diese genannte zwei weitere Elektroventile (45, 46) sind mit dem genannten gemeinsamen Knoten (50) verbunden, sowohl als ein Luftdruckstransduktor (48), der einen im genannten gemeinsamen Knoten (50) anwesenden Luftdruckswert in einen elektrischen Signal, der zu den elelktronischen Messintrument geschickt wird, verwandelt; zwischen der Luftdrucksquelle oder Kompressor (47) und die dazu gehörige der genannten weiteren Elektroventile (45) gibt es ein Filter (52), ein Luftdrucksregulator (53) und ein Ein-Weg-Ventil (51),
c) wobei die genannte Luftzulieferungsanlage (5) auf der genannten Basis (4) montiert wird und als Vermittler zwischen der pneumatischen Anlage (35) der Arbeitsanlage oder Maschine (1) und Reifenventile mit Hilfe der genannten zwei Aufblasleitungen oder -röhre (21) wirkt; und
d) wobei die genannte Luftdrucksquelle oder Kompressor (47) ausserhalb oder innerhalb des Gehäuses (2) der Arbeitsanlage oder Maschine (1) aufgebaut werden kann,
**gekennzeichnet dadurch, dass** das System weiter hinaus folgende Elemente einschliesst:
(a) ein Infrarotsignalempfänger, der mit dem genannten Anzeigerbeaufsichtigungsmodul (29) verbunden ist, um Information über ausgesuchte Aufblasluftdruckwerte von einer ersten Fernsteuerung zu bekommen
(b) eine Struktur, um den genannten Aufblasleitungen oder -röhre (21) zu unterstützen, die in der Luftzulieferungsanlage (5) eingeschlossen ist, und die aus einem Träger, einem drehbaren Arm (14) und Lokalisierungsmitteln (17) bestehen, die Lokalisierungsmittel bestehen aus Rotationsmittel für den genannten drehbaren Arm (14), die auf den oberen Ende des genannten Trägers (13) stehen.
(c) Mittel für automatische Rückkehr oder Entziehung (25a, 25b) der genannten Aufblasleitungen oder -röhre (21) von einer Arbeitsposition zu einer Ausruhposition, um so Beschädigung und Schmutzigkeit zu vermeiden, wobei die genannte Mittel in der Luftzulieferungsanlage (5) eingeschlossen sind; und
(d) Kupplungsmittel, die an den freien Enden der genannten Leitungen oder Röhre (21) liegen, um den genannten Aufblasleitungen oder -röhre (21) mit den Reifenventile zu verkuppeln, und die aus Kupplungen (24a, 24b) bestehen.

2. Elektronisches Luftzulieferungs- und Luftdruckausgleichsystem für Reifen nach Anspruch 1, **dadurch gekennzeichnet, dass** das Anzeigerbeaufsichtigungsmodul (29) des Messintruments aus folgende Elemente besteht: einem Mikrokontroller, einem Anzeiger (36), der auf der Vorderseite (6c) der Arbeitsanlage oder Maschine (1) befestigt ist, ein Parallelserien Interface um den Anzeiger (36) zu führen, ein von Kabeln geschütztem Speicher, ein Stromzulieferungskontrollkreis, eine Batterie und ein Aufladungsstromkreis, wobei das genannte Anzeigerbeaufsichtigungsmodul (29) dazu fähig ist, die Luftdruckswertvermessung aussen zu zeigen, und zwar in einer intelligenten Form, durch die Lagerung der Information die von aussen durch den Tastaturmodul (30) eingegeben wird und durch die Überwachung der Systemsoperation, die fähig ist, Information die von den restigen Modulen kommen, zu leiten, und dabei trifft es die Entscheidung, welches Prozess muss hervorgebracht werden, und es schickt die geeignete Befehle durch die Datenkommunikationsverknüpfung (32) zu den restigen Modulen.

3. Elektronisches Luftzulieferungs- und Luftdruckausgleichsystem für Reifen nach Anspruch 1, **dadurch gekennzeichnet, dass** das Tastaturmodul (30) im Messintrument mit einem Mikrokontroller, eine Tastatur (37), die auf der Vorderseite (6c) der Arbeitsanlage oder Maschine (1) befestigt ist, einem Interface zwischen dem genannten Mikrokontroller und der Tastatur (37), Lichtanzeiger (38) und Kassierungsmittel für Münzen (39), Kreditkarten, Geldkarten oder ähnliche (40) versehen ist, wobei das genannte Tastaturmodul (30) dazu geeignet ist, Befehle von aussen zu bekommen und diese dem Beaufsichtigungsmodul (29) mitzuteilen, für Ihre Interpretierung und Durchführung, sowohl als für Entdeckung einer Tastenaktivierung.

4. Elektronisches Luftzulieferungs- und Luftdrucksausgleichsystem für Reifen nach Anspruch 1, **dadurch gekennzeichnet, dass** die Fernsteuerung dazu geeignet ist, einen Aufblasdruckwert auszuwählen, wobei es entweder eine numerische Tastatur, die für das Eingeben jenes Druckwerts geeignet ist, oder eine einzige Taste, die einen eingenommenen Wert enthält, der mit dem optimalen Luftdruck eines besonderen Fahrzeugs gebunden ist, einschliesst, und ein Verwandler der von der genannten Tastatur erzeugte elektrischen Signale in Infrarotwellen, und ein Übertrager dieser Wellen, der fähig ist, einen Signal, der den von der genannten Tastatur oder Taste der genannten Fernsteuerung eingegebenen Wert entspricht, zu den Infrarotempfangskreis der in der Arbeitsanlage oder Maschine eingebaut ist, zu senden, wobei dieser Signalempfangskreis mit einem Signaltransduktor versehen ist, der fähig ist, die empfangene Infrarotsignale in elektrische Signale umzuwandeln, und mit Mitteln zur Übertragung zum Anzeigerbeaufsichtigungsmodul (29) des Messintruments.

5. Elektronisches Luftzulieferungs- und Luftdruckausgleichsystem für Reifen nach Anspruch 1, **dadurch gekennzeichnet, dass**:
- die genannte zwei erste Elektroventile (43, 44) von der genannten pneumatischen Anlage (35) arbeiten zur selben Zeit und sind fähig, Distributions- und Konnektionsmittel, wie die von den Fahrzeugsräderventile kommende Röhre , zu dem genannten gemeinsamen Knoten (50) zu verbinden;
- einer der genannten weiteren Elektroventile (45) ist fähig, sobald der obere Elektroventilsatz des Reifens geöffnet wird, den gemeinsamen Knoten (50) mit der Luftdrucksquelle oder Kompressor (47) in Verbindung zu setzen .
- der zweite der genannten weiteren Elektroventile (46) ist fähig, sobald der obere Elektroventilsatz des Reifens geöffnet wird, den gemeinsamen Knoten (50) mit der Atmosphäre in Verbindung zu setzen.

6. Elektronisches Luftzulieferungs- und Luftdruckausgleichsystem für Reifen nach Anspruch 1, **dadurch gekennzeichnet, dass** die genannte Struktur um die genannte Luftzulieferungsanlage (5) zu tragen aus dem drehendem Arm (14) besteht, der einen L-förmigen Rohrteil einschliesslich eines senkrechten Stücks (14a) und eines waagerechtem Stücks (14b) hat, vorzugsweise aus metallischem Materiall oder ähnlichem, und aus einem Träger (13), der aus einem hohlen Rohr aus bemaltem Stahl besteht, an seinem unterem Ende von der Basis oder Traganlage (4) gestützt, an der es durch eine Verankerungsplatte (15) befestigt ist, wobei der genannte erste senkrechte Rohrteil (14a) sich von seinem oberen Ende ausbreitet und der zweite waagerechte Rohrteil (14b) eine Kurve von 90° beschreibt, bis es waagerecht wird, d.h., paralell zum Boden, und es hat einen engeren Teil als der des vorderen Teils, und eine diagonale Stange (16) um den genannten waagerechten Rohrteil (14b) zu tragen, und dass die genannte Aufblasleitungen oder -röhre (21) durch dem Inneren der genannten Stützungstruktur verlaufen, durch Ihre Basis eingeführt, und die Aufblasleitungen oder -röhre (23) für Fahrzeuge mit zwei Räder kommen aus einem seitlichen Loch (22) heraus, der an dem genannten Träger gemacht wurde, und die Aufblasleitungen oder -röhre (21) für Fahrzeuge mit drei oder mehr Räder kommen jede aus Löcher (19, 20) heraus, die unten an beiden Enden des oberen waagerechten Rohrteils (14b) gemacht wurden, wobei die genannten Aufblasleitungen oder -röhre (21) eine Spalte von, vorzugsweise, zwischen 1,75 m und 2,80 m; noch besser zwischen 1,90 m und 2,50 m haben, und wobei der waagerechte Rohrteil vorzugsweise eine Höhe von mehr als 1,70 m von dem Bodenplan hat.

7. Elektronisches Luftzulieferungs- und Luftdruckausgleichsystem für Reifen nach Anspruch 1, **dadurch gekennzeichnet, dass** die genannte Lokalisierungsmittel aus Mittel bestehen, die um einen Kupplungspunkt zwischen beide Rohrteile der Stützungsstruktur herum drehen, wobei der Träger (13) und der drehende Arm (14) vorzugsweise aus einem Nylon - Bindering (17) bestehen, der aus zwei gekuppelte Zylinder (17a, 17b) besteht, die schräg und gekreuzt vorliegen, was eine Rotation von vorzugsweise 90°-180° des oberen Rohrteils (14b) rund um den unteren Rohrteil (14^{a}) erlaubt, von einer Ruhposition, betrachtet als die in der das obere waagerechte Rohrteil (14b) hauptsächlich paralell zu der Längenachse eines bei dem elektronisches Luftzulieferungs- und Luftdruckausgleichsystem für Reifen geparkten Fahrzeugs gestellt wird, zu einer Arbeitsposition, betrachtet als die in der das obere waagerechte Rohrteil (14b) hauptsächlich senkrecht zur Längenachse eines bei dem elektronisches Luftzulieferungs- und Luftdruckausgleichsystem für Reifen geparkten Fahrzeugs gestellt wird, mit automatischer Schwerkraftsrückkehr von der genannten Arbeitsposition zu der genannten Ruhposition.

8. Elektronisches Luftzulieferungs- und Luftdruckausgleichsystem für Reifen nach Anspruch 1, **dadurch gekennzeichnet, dass** jeder der genannte Mittel für automatische Rückkehr oder Entziehung der Aufblasleitungen oder -röhre (21) von einer Arbeitsposition zu einer Ruhposition aus senkrechte Rollen (25a, 25b) für Stütze, Rückkehr oder Entziehung der Aufblasleitungen oder -röhre (21) bestehen, die von dem waagerechten Rohrteil (14b) der Stützstrucktur hängen.

9. Elektronisches Luftzulieferungs- und Luftdruckausgleichsystem für Reifen nach Anspruch 1, **dadurch gekennzeichnet, dass** es mit einer akkustischen Warnanlage versehen ist, die durch einen akkustischen Signal anzeigt, dass das System mit dem Aufblasund Ausgleichprozess fertig ist, als die vorgewählte Werte erreicht werden.

10. Elektronisches Luftzulieferungs- und Luftdruckausgleichsystem für Reifen nach Anspruch 1, **dadurch gekennzeichnet, dass** es dazu fähig ist, mit verschieden auszuwählenden Kassierungsformen zu arbeiten, bestehend aus:
a) eine freie Form; und
b) eine Kassierungsform, die mit den folgenden von den Benutzer auszuwählenden Möglichkeiten versehen ist: Zahlungsform mit Münzen (39) oder Zahlungsform mit Karte (40), entweder mit einer Eigentümerkarte die eine bestimmte Anzahl von Dienstleistungen enthält oder mit einer Geldkarte jener Bank.

11. Elektronisches Luftzulieferungs- und Luftdruckausgleichsystem für Reifen nach Anspruch 1, **dadurch gekennzeichnet, dass** das System zweite Fernsteuerungsmittel einschliesst, um Fernoperationen zu ermöglichen, wobei die genannte Fernsteuerungsmittel eine Modem- Kommunikation zwischen eine zentrale Station und das System ermöglichen.

12. Elektronisches Luftzulieferungs- und Luftdruckausgleichsystem für Reifen nach Anspruch 1, **dadurch gekennzeichnet, dass** es mit folgende Elemente versehen ist: einem Überträger - Empfänger - system, das mit Hilfe Infrarotwellen oder anderer elektromagnetische Wellen geführt wird, einem Transduktor um Infrarotsignale in elektrische Signale umzuwandeln und Mitteln, um den Anzeigerbeaufsichtigungsmodul (29) Informationen übertragen zu können, die zusammen mit externe Quellen arbeiten können, wobei diese Quellen die Parameter messen, von denen der Aufblasdruck abhängt, wie zum Besipiel die Temperatur.

13. Elektronisches Luftzulieferungs- und Luftdruckausgleichsystem für Reifen nach Anspruch 1, **dadurch gekennzeichnet, dass** die genannte Kupplungsringe (24a oder 24b, beziehungsweise 24c) einen zylinderförmigen Aussenteil oder Rutschteil einschliessen, der an seiner hinteren Seite mit einem Schraubenhut (62) geschlossen ist, und an seinem Gegenende mit einer kresiförmigen Öffnung (63) versehen ist, die dafür geeignet ist, in dem Reifenventil (78) einzugehen; innerhalb des genannten Aussenteils oder Formschiebers (61) sind zwei Teile (64, 65) gestellt, die in bezug auf den ersten (61) rutschen und einem mit dem anderen montiert sind, vorzugsweise durch eine Schraubenkupplung (66).

14. Elektronisches Luftzulieferungs- und Luftdruckausgleichsystem für Reifen nach Anspruch 1, **dadurch gekennzeichnet, dass** innerhalb einer der genannten Teile (64), die in dem Aussenteil oder Rutschteil (61) liegen, und zwar am nächsten zum Reifenventil (78), gibt es einen hohlen, innerhalb plattgedrückten Rohrteil (67), der in bezug auf den genannten Teil (64) in dem es liegt gleitet, und in dem ein Hammer (68) liegt, der aus eine zylinderförmige Stange besteht, die eine Verbreitung mit einer poligonalen, vorzugsweise hexagonalen Kreuzung hat, die dazu geeignet ist, die Rückkehr innerhalb des genannten Rohrteil (67) zu vermeiden, sowohl als einen Luftfluss zwischen den Spalten, die zwischen den poligonalen Seilen und der kreisförmigen Sektion des Rohrteils (67) vorhanden sind, zu erlauben, wobei der genannte Rohrteil (67) an seinem Ende, am nächsten zum Reifenventil (78) steht, einen kegelförmigen Gummisiegel (79) hat, um den Lufteingangsloch zuzustopfen, sowohl als zwei Federn (74a, 74b) mit L-förmigen Enden, die durch einer externen zylinderförmigen Kette und mehrere Spalten (76a, 76b)befestigt sind, wobei diese Spalten in der Kupplung der Rohrteils (67) gemacht wurden, um die L-förmige Ende der genannten Federn (74a, 74b) einzustecken.

15. Elektronisches Luftzulieferungs- und Luftdruckausgleichsystem für Reifen nach Anspruch 1, **dadurch gekennzeichnet, dass** der zweite von den genannten Teilen (65) die innerhalb des Aussenteils oder Formschiebers (61) liegen, und zwar der, der am nächsten zum Lufteingang durch den Aussenleitungen oder -röhre (21) liegt, innerhalb eine zylinderförmige Höhle hat, und ein Ventilherz (69) ist an seinem Vorderend geschraubt, der ähnlich ist mit denen, die es in Fahrzeugventile gibt, und an seinem freien Ende hat es eine kleine Feder (77), und seinem Hinterteil endet ausserhalb in mehrere schwalbenschwanzförmige Projektionen (70), was für eine hermetische Kupplung der äusseren Luftleitung oder -rohr (21), durch welche die Luft von der Arbeitsanlage oder Maschine (1) fliesst, geeignet ist, wobei der genannte Teil (65) ausserdem eine runde kreuzförmige Innerverbreitung (71) hat, die vier Bälle (72) hat, die geometrisch und normalerweise paarweise gegenseitig zueinander liegen, die eingelegt und mit Hilfe von Federn (73) eingepresst sind, wobei die genannte Bälle (72) gegensätzlich zu einer inneren Spalte (84) liegen, die in der genannten Aussenteil oder Rutschteil (61) gemacht wurde, wobei eine innere Feder (80) an der genannten runden kreuzförmigen Innerverbreitung (71) angelegt wird , gegensätzlich zum Inneren des Kupplungrings, rund um den rohrförmigen Aussenteil des genannten Teils (65), und dazu geeignet, beide Teile (64, 65), die in dem genannten Aussenteil oder Rutschteil (61) liegen vollständig zu bewegen, und somit die genannte Bälle (72) aus den entsprechenden Spalten (84) herauszunehmen.

16. Elektronisches Luftzulieferungs- und Luftdruckausgleichsystem für Reifen nach Anspruch 1, **dadurch gekennzeichnet, dass** der genannte Aussenteil oder Rutschteil (61) innerhalb mit einer Kette (83) versehen ist, die wie einen abgebrochenen Kegel geformt ist und dazu geeignet ist, die Federn mit L-förmigen Enden (74a, 74b) einzupressen, wenn der ganze von den Teilen (64, 65) gebildete Satz deshalb eine Halteposition erreicht hat, weil der Schraubenhut (62) den genannten Aussenteil oder Rutschteil (61) zugestopft hat.

17. Elektronisches Luftzulieferungs- und Luftdruckausgleichsystem für Reifen nach Anspruch 1, **dadurch gekennzeichnet, dass** es eine verteilte Multistationsgestaltung hat, die eine Gruppe von selbständige Anlagen (55.1, 55.2, 55.n) einschliesst, die abhängig von dem genannten Leitungszentrum (54) sind, wobei der genannte Leitungszentrum (54) folgende Elemente einschliesst: einen Kompressor, einen allgemeinen Kontrollkreis der zur Durchführung der Akzeptierung von Kassierungsmittel, Ladentransaktionen, zur Kontrolle der Dienstzeiten und zur Kommunikationsleitung geeignet ist, sowohl als ein Kommunikationsmodul, vorzugsweise via Modem, mit den selbständigen Benutzanlagen (55.1, 55.2, ...55.n)

## Revendications

1. Système électronique de fourniture d'air et de nivellement de pression pour pneus, à installer dans des stations essence, aires de service, points d'assistance mécanique au bord des routes ou similaires, étant le système équipé de:
a) une base ou unité de support (4), en forme de parallélépipède, ouverte par sa face inférieure, faite de préference d'une plaque d'acier, et pourvue de moyens pour fixer cette base au sol avec des vis (27) et des bois de retention, et comprenant des moyens pour fixer sur cette base une unité de travail ou machine (1) et une unité de fourniture d'air (5) avec des vis et des écrous.
b) unité de travail ou machine (1) ennoncée, ayant :
une carcasse (2) avec une forme carrée piramidale, faite d'un de ses cotés (6d) de plaque de metal terne et, des cotés restants (6a, 6b, 6c), faite de résine de poliuréthane rigide étendu à haute densité, étant pourvue de ce coté métallique (6d) d'une ou plusieures portes (7a, 7b), propre à permettre l'accès à des élements intérieurs, cette carcasse étant de plus pourvue de moyens de ventilation consitués d'écrans laissant rentrer l'air (9, 10), localisés de préference sur les parties supérieure et inférieure de cette carcasse (2); un cadre de métal (11), consistant en une structure métallique préferablement faite de profils en forme de L (12), et de moyens pour y fixer la carcasse, préferablement constitués de vis.
un instrument de mesure électronique, constitué d'un ensemble électronique formé de trois modules intelligents, tels qu'un module de supervision d'affichage (29), un module à clavier (30) et un module de réglage (31), et d'un module de contrôle pneumatique et de fourniture de courant (33), ainsi que des prises pour fourniture de courant (34) et pour communication de données (32) entre ces modules ; et
un équipement pneumatique (35) consistant en quatre électrovalves (42, 44, 45, 46), commandé par le module de contrôle pneumatique et de fourniture de courant (33), étant les deux premières électrovalves (43, 44) propres à communiquer deux conduits ou tuyaux de gonflage (21) des unités de fourniture d'air mentionnées (5) de forme individuelle à un noeud (50) commun, etant ce noeud commun (50) communiqué alternativement par moyen de deux électrovalves respectives additionnelles (45, 46) avec une source de pression ou compresseur (47), ou avec l'atmosphère (49), étant ces deux électrovalves additionnelles (45, 46) connectées à ce noeud commun (50) ainsi qu'à un transducteur de pression (48) qui transforme une valeur de pression existante dans ce noeud commun (50) en un signal électrique qui est envoyé à l'instrument de mesure électronique, il y a entre la source de pression ou compresseur (47) et la correspondante d'entre ces électrovalves additionnelles (45), un filtre (52), un régulateur de pression (53) et une valve de non-retour (51),
c) étant cette unité de fourniture d'air (5) monté sur cette base (4) et faisant d'intermediaire entre l'équipement pneumatique (35) de l'unité de travail ou machine (1) et les valves de pneu par moyen des deux conduits ou tubes de gonflage mentionnés (21); et
d) pouvant cette source de pression ou compresseur (47) être installée à l'intérieur ou à l'extérieur de la carcasse (2) de l'unité de travail ou machine (1),
**caractérisé par le fait que** le système comprend de plus les élements suivants :
(a) un receveur de signaux infrarouges connecté à ce module de supervision d'affichage (29) pour recevoir de l'information sur des pressions de gonflage sélectionnées d'une première télécommande
(b) une structure pour supporter ces conduits ou tubes de gonflage (21), étant cette structure incluse dans l'unité de fourniture d'air (5), et consistant en un support (13), un bras giratoire (14) et des moyens de repérage (17) consistants en des moyens de rotation pour ce bras giratoire (14) situés à l'extrême superieur de ce support (13) ;
(c) des moyens pour retour automatique ou retrait (25a, 25b) des conduits ou tubes de gonflage (21) d'une position de travail à une position de repos, en évitant leur déterioration ou salissement, étant ces moyens inclus dans l'unité de fourniture d'air (5); et
(d) des moyens d'accouplement situés aux éxtrèmes libres de ces conduits ou tubes (21) pour accoupler ces conduits ou tubes de gonflage (21) ou des valves de pneus, consistant ces moyens d'accouplement en des buses d'accouplement (24a, 24b).

2. Système électronique de fourniture d'air et de nivellement de pression pour pneus, en accord avec la revendication 1, **caracterisé par le fait que** le module de supervision d'affichage (29) de l'instrument de mesure est constitué par un microcontrôleur de ..., un afficheur (36) fixé sur la partie avant (6c) de l'unité de travail ou machine (1), un interface de séries paralleles pour gérer l'afficheur (36), une mémoire protégée par des cables, un circuit de contrôle de distribution de courant, une baterie et un circuit de charge, étant ce module de supervision de l'affichage (29) capable de présenter à l'extérieur la mesure de la pression, d'une façon intelligente, registrant l'information rentrée de l'extérieur à travers le module de clavier (30), et supervisant l'operation du système, capable de gérer l 'information reçue des modules restants, decidant quels procès doivent êtres affectés, et envoyants des ordres appropriées à travers la prise pour communication de données (32) aux modules restants.

3. Système électronique de fourniture d'air et de nivellement de pression pour pneus, en accord avec revendication 1, **caracterisé par le fait que** le module de clavier (30) dans l'instrument de mesure est pourvu d'un microcontrôleur, d'un clavier (37) fixé sur le coté avant (6c) de l'unité de travail ou machine(1), d'un interface entre ce microcontrôleur et le clavier (37), des affichages lumineux (38) et de moyens d'encaissement de pièces (39), cartes de crédit, cartes d'argent ou similaires (40), étant ce module de clavier (30) capable de recevoir des ordres de l'extérieur et de les communiquer au module de supervision (29) pour leur interpretation et execution, ainsi que pour la detection de l'activation d'une clé.

4. .- Système électronique de fourniture d'air et de nivellement de pression pour pneus, en accord avec revendication 1, **caracterisé par le fait que** cette télécommande capable de selectionner une pression de gonflage, comprenant ou bien un clavier numérique, capable d'introduire n'importe quelle valeur de pression, ou bien une seule clé contenant l'enregistrement d'une valeur associée à la pression optimale du pneu d'un véhicule particulier, un convertisseur de signaux électriques generés par ce clavier en ondes infrarouges, et un transmetteur de ces ondes, capable d'emmetre un signal correspondant a la valeur introduite par ce clavier ou clé de cette télécommande au circuit infrarouge installé dans l'unité de travail ou machine (1), étant ce circuit de reception de signaux pourvu d'un transducteur de signaux capable de transformer les signaux infrarouges reçus en un signal électrique, et de moyens de transmission au module de supervision d'affichage (29) de l'instrument de mesure.

5. Système électronique de fourniture d'air et de nivellement de pression pour pneus, en accord avec revendication 1, **caracterisé par le fait que** :
- les deux premières électrovalves (43, 44) de cet équipement pneumatique (35) mentionnées travaillent en même temp et sont capables de connecter les moyens de distribution et de connexion, comme les tubes (21) venant des valves des pneus de véhicules, à ce noeud commun (50)
- une de ces électrovalves (45) est capable, une fois l'ensemble supérieur d'électrovalves de peu ouvertes, de connecter le noeud commun (50) à la source de pression ou compresseur (47)
- la deuxième de ces électrovalves (46) est capable de, une fois l'ensemble supérieur d'électrovalves de pneu ouvertes, joindre le noeud commun (50) à l'atmosphère.

6. Système électronique de fourniture d'air et de nivellement de pression pour pneus, en accord avec revendication 1, **caracterisé par le fait que** cette structure de support de cette unité de fourniture d'air (5) consiste en un bras giratoire (14) ayant une pièce tubulaire en forme de L comprenant une pièce verticale (14a) et une pièce horizontale (14b), de préférence faite d'un matériel metallique ou similaire, et le support consistant (13) en un tube creux fait d'acier peint, supporté à son éxtrémité la plus basse par la base ou unité de support (4) à laquelle il est fixé par moyen d'une plaque d'ancrage (15), s'étendant cette première pièce tubulaire verticale (14^{a}) depuis son extremité superieure, décrivant la deuxième pièce tubulaire horizontale (14b) une courbe de 90° jusqu'à devenir horizontale, c'est à dire, parallele au sol, ayant une section plus étroite que celle de la pièce à l'avant, et une barre diagonale (16) pour supporter et renforcer cette pièce tubulaire horizontale (14b), et **par le fait que** ces tubes ou conduits de gonflage (21) passent par l'intérieur de cette structure de support, rentrant par sa base et sortant d'un coté le conduit ou tube de gonflage (21) pour véhicules à deux roues, par un trou latéral (22), et les conduits ou tubes de gonflage (21) pour véhicules à trois roues ou plus, chaqu'un par des trous (19, 20) faits en bas, dans les deux extrémitées de la pièce tubulaire horizontale supérieure (14b), ces tubes ou conduits de gonflage (21) ayant un espace de préférence entre 1.75 m et 2.80 m ; plus souhaitable entre 1.90m et 2.50 m, et ayant la pièce tubulaire horizontale une hauteur de préférence de plus de 1.70m depuis le sol.

7. Système électronique de fourniture d'air et de nivellement de pression pour pneus, en accord avec revendication 1, **caracterisé par le fait que** ces moyens de repérage consistent en des moyens pour tourner autour d'un point d'accouplement entre les deux pièces tubulaires de la structure de support, étant le support (13) et le bras giratoire (14) constitués de préférance par un manchon de nylon (17) composé de deux cylindres accouplés (17a, 17b), de façon incliné et croisés, qui permettent une rotation de préférence de 90°-180° de la pièce tubulaire supérieure (14b) autour de la pièce tubulaire inférieure (14a), depuis une position de repos considérée comme celle où la pièce tubulaire horizontale supérieure (14b) est substantielment placé de façon parallele à l'axe longitudinal d'un véhicule garé près du système électronique de fourniture d'air et de nivellement de pression pour pneus, jusqu'à une position de travail, considérée comme celle où la pièce tubulaire horizontale supérieure (14b) est substantiellement placé de façon pérpendiculaire à l'axe longitudinal d'un véhicule garé près du sistème électronique de fourniture d'air et de nivellement de pression pour pneus, avec retour automatique gravitationnel de cette position de travail à cette position de repos.

8. Système électronique de fourniture d'air et de nivellement de pression pour pneus, en accord avec revendication 1, **caracterisé par le fait que** ces moyens de retour automatique ou retrait des conduits ou tubes de gonflage (21) d'une position de travail à une position de repos, consistent chaqu'un en des glènes verticaux (25a, 25b) pour soutien, retour ou retrait des conduits ou tubes de gonflage (21), qui pendent de la pièce tubulaire horizontale (14b) de la structure de support.

9. Système électronique de fourniture d'air et de nivellement de pression pour pneus, en accord avec revendication 1, **caracterisé par le fait qu'**il est pourvu d'un dispositif d'alarme accoustique qui indique gràce à un signal accoustique que le système a fini le procès de gonflage-équilibrage, la valeur préselectionné ayant été atteinte.

10. Système électronique de fourniture d'air et de nivellement de pression pour pneus, en accord avec revendication 1, **caracterisé par le fait qu'**il est capable de travailler avec de divers moyen d'encaissement à choisir, qui consistent en :
a) une position libre ; et
b) une position de paiement, pourvue des suivantes options à choisir par le consommateur : mode de paiement par pièces (39) ou mode de paiement par carte (40), soit avec une carte de propriété contenant un nombre détérminé de services ou avec un carte monétaire bancaire.

11. Système électronique de fourniture d'air et de nivellement de pression pour pneus, en accord avec revendication 1, **caracterisé par le fait que** le système comprend des seconds moyens de télecommande permettant des opérations à distance, comprenant ces moyens de télécommande l'établissement de communication par modem entre une station centrale et le système.

12. Système électronique de fourniture d'air et de nivellement de pression pour pneus, en accord avec revendication 1, **caracterisé par le fait qu'**il est pourvu d'un système transmetteur-récepteur opéré par infrarouges ou autres ondes de type électromagnetique, un transducteur pour convertir les signaux infrarouges en signaux électriques et des moyens pour transmettre au module de supervision de l'affichage (29), capable de travailler ensemble avec de sources de signaux externes qui mesurent les parametres desquels dépend la pression de gonflage, comme par exemple la température.

13. Système électronique de fourniture d'air et de nivellement de pression pour pneus, en accord avec revendication 1, **caracterisé par le fait que** ces buses d'accouplement (24a ou 24b, 24c respectivement) comportent une pièce ou coulisse extérieure de forme cylindrique (61) fermée en sa partie arrière par un couvercle à vis (62), et qui est pourvu de son coté opposé d'un élargissement circulaire (63) capable de rentrer à l'intérieur de la valve du pneu (78); à l'intérieur de cette pièce ou coulisse extérieure (61), il y a deux pièces (64, 65) coulissant en relation à la première (61) et montées l'une avec l'autre de préférance avec un accouplement de vis (66)

14. Système électronique de fourniture d'air et de nivellement de pression pour pneus, en accord avec revendication 1, **caracterisé par le fait qu'**à l'intérieur de ces pièces (64) logées dans la pièce ou coulisse extérieure (61), dans la plus proche de la valve du pneu (78), une pièce tubulaire creuse, foulé à l'intérieur (67) est logée coulissante en relation à cette pièce (64) qui la loge, et logeant un marteau (68) qui consiste en une barre cylindrique qui a un élargissement avec une section croisé polygonale, de préférence hexagonale, capable d'eviter le retour à l'intérieur de cette pièce tubulaire (67), ayant à son extrémité la plus proche à la valve du pneu (78) un sceau conique en gomme, capable de boucher le trou qui laisse rentrer l'air, ainsi que deux ressorts finis en L (74a, 74b) fixés par un collier cylindrique externe (75) et par plusieurs fentes (76a, 76b) faites sur la buse de la pièce tubulaire (67), propres à loger l'extrême en forme de « L» de ces ressorts (74a, 74b).

15. Système électronique de fourniture d'air et de nivellement de pression pour pneus, en accord avec revendication 1, **caracterisé par le fait que** la deuxième des ces pièces (65) logé dans la pièce ou coulisse extérieure (61), la plus proche à l'acces d'air à travers le conduit ou tube externe (21), a un creu cylindrique a l'intérieur et a la partie centrale d'une valve (69) vissé a son extreme avant, similaire à ceux logés dans les valves de véhicules, qui a un petit ressort (77) à son extrèmité libre et sa portion arrière finissant externement en une série de projections en forme de queu d'arronde (70), qui est propre à un accouplement hérmetique au conduit ou tube d'air externe (21), à travers lequel l'air de l'unité de travail ou machine (1) passe, ayant cette pièce (65) de plus un élargissement circulaire intérieur en forme de couronne (71) qui a quatre balles (72) opposé diametralement et normalement de deux en deux, incrustées et pressées par des ressorts (73), étant ces balles (72) face à une fente intérieure (84) faite dans cette pièce ou coulisse extérieure (61), un ressort intérieur (80) étant arrangé à coté de cette élargissement circulaire intérieure en forme de couronne (71) et face à la partie intérieure de la buse d'accouplement, entourant la partie extérieur tubulaire de cette pièce, capable de bouger integralement les deux parties (64, 64) logées dans cette partie ou coulisse extérieure (61), et ainsi faire sortir ces balles (72) des fentes correspondantes (84).

16. Système électronique de fourniture d'air et de nivellement de pression pour pneus, en accord avec revendication 1, **caracterisé par le fait que** cette pièce ou coulisse externe (61) est pourvue à l'intérieur d'un collier (83) qui a la forme d'un cône tronqué, capable de presser ces ressorts finissant en L (74a, 74b) quand l'ensemble integral formé par les pièces (64, 65) a bougé jusqu'à un arret en raison de la fermeture de cette pièce ou coulisse externe (61) par le couvercle vis (62).

17. Système électronique de fourniture d'air et de nivellement de pression pour pneus, en accord avec revendication 1, **caracterisé par le fait qu'**il a une configuration multi-station distribuée comprenant un ensemble de terminaux d'utilisation autonomes (55.1, 55.2, ..., 55.n) dépendant de ce centre de gestion (54), comprenant ce centre de gestion un compresseur, un circuit de contrôle global capable de mener à bien l'acceptation de modes de paiement, transaction de magasin, de contrôler les temps de service, et de gerer les communications, ainsi qu'un module de communication de préférence via modem avec les terminaux d'utilisation autonomes (55.1, 55.2, ,..55.n)
